(19) Europäisches Patentamt

European Patent Office

Office européen des brevets

(11) **EP 1 981 281 A2**

(12) **EUROPEAN PATENT APPLICATION**

(43) Date of publication:
**15.10.2008 Bulletin 2008/42**

(51) Int Cl.:
***H04N 7/26*** (2006.01)

(21) Application number: **07121914.1**

(22) Date of filing: **29.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.03.2007 KR 20070026913**

(71) Applicant: **LG Electronics Inc.**
**Yeongdeungpo-gu**
**Seoul 150-721 (KR)**

(72) Inventor: **Park, Sung Ho**
**137-724 Seoul (KR)**

(74) Representative: **Cabinet Plasseraud**
**52 rue de la Victoire**
**75440 Paris Cedex 09 (FR)**

(54) **Block matching algorithm operator and encoder using the same**

(57)    Provided are a block matching algorithm (BMA) operator and an encoder, in which Sum of Absolute Differences (SAD) data is obtained by performing a BMA operation in a parallel manner, encoding in real time is performed using a search range of ±32 or more, and moving image data is compressed at a high rate by using such a wide search range.

FIG. 11

EP 1 981 281 A2

**Description**

CROSS-REFERENCE TO RELATED APPLICATION

This application claims priority from Korean Patent Application No. 10-2007-0026913 filed on March 20, 2007 in the Korean Intellectual Property Office, the disclosure of which is incorporated herein by reference in its entirety.

BACKGROUND OF THE INVENTION

1. Field of the Invention

The present invention relates to a block matching algorithm (BMA) operator and an encoder using the BMA operator, and more particularly, to a BMA operator which can compress and encode moving image data, and an encoder using the BMA operator.

2. Description of the Related Art

Encoders, which convert one type of signal to another type of signal, are being widely used in the field of digital electronic circuits.

Particularly, encoders have also been widely used in the field of digital image processing, such as in the field of moving image processing, due to their capability to compress data at a high rate.

Compression rate is one of the most important factors that need to be considered in processing digital images (particularly, moving images).

Most video images and photos can be encoded using a YUV (where Y represents luminance, and U and V represent chrominance) color space so that luminance can have full resolution (i.e., $320\times240$ pixels), and that chrominance (U and V) can have half resolution (i.e,. $160\times120$ pixels) in both horizontal and vertical directions. Assuming that one byte is allocated to each of Y, U, and V samples, an average of 1.5 bytes may be used for each pixel. That is, each pixel uses one Y byte, and each $2\times2$ uses one U byte and one V byte.

Accordingly, the size of frames of a moving image amounts to 115,200 bytes. In addition, in the case of processing moving image data at a rate of 30 frames per second, a large storage capacity of 3.5 MB is required to store only one second-long moving image data. Thus, there is a limit in implementing hardware devices that can meet the above-mentioned requirements.

Therefore, data compression is essential, and nearly all currently available encoders are equipped with a compression function and are thus capable of compressing and encoding moving image data.

The compression of moving image data is mainly characterized by removing redundancy in moving image data through motion estimation.

By removing redundancy in moving image data, it is possible to maximize the compression efficiency of moving image data. However, in order to remove redundancy in moving image data, complicated hardware devices are required, which is a major obstacle in achieving effective data compression for moving images.

SUMMARY OF THE INVENTION

Accordingly, the present invention is directed to a block matching algorithm (BMA) operator and an encoder using the BMA operator that substantially obviates one or more problems due to limitations and disadvantages of the related art.

It is an aspect of the present invention to provide a BMA operator and an encoder which can obtain Sum of Absolute Differences (SAD) data by performing a BMA operation in a parallel manner, perform encoding in real time using a search range of $\pm32$ or more, and compress moving image data at a high rate by using such a parallel manner.

Additional advantages, aspects, and features of the invention will be set forth in part in the description which follows and in part will become apparent to those having ordinary skill in the art upon examination of the following or may be learned from practice of the invention.

According to an aspect of the present invention, there is provided a BMA operator including a subtraction module which includes a plurality of subtractors that perform subtraction on pixel data of a current macroblock having a size of $n\times n$ and pixel data of each of a plurality of reference macroblocks within a search range of the current macroblock whenever a pulse is applied; and an SAD storage module which includes a plurality of SAD storage units that are sequentially arranged and receive the output of the respective subtractors, wherein an m-th SAD storage unit of the SAD storage module comprises an adder which adds the output of an m-th subtractor of the subtraction module and a value present in an (m-1)-th storage unit of the SAD storage module, and stores the result of the addition..

From the time of application of an (nxn)-th pulse onward, a value present in an (nxn)-th SAD storage unit may be used as an actual SAD.

According to another aspect of the present invention, there is provided an encoder which estimates a motion vector in units of n×n macroblocks using a search range of ±X (where X is an integer) and allocates a BMA operator to each of first through fourth quadrants of a coordinate plane whose origin is located at the position of a pixel $p_{0,0}$ of a current macroblock, wherein the BMA operator comprises a subtraction module which includes a plurality of subtractors that perform subtraction on pixel data of a current macroblock having a size of n×n and pixel data of each of a plurality of reference macroblocks within a search range of the current macroblock whenever a pulse is applied; and an SAD storage module which includes a plurality of SAD storage units that are sequentially arranged and receive the output of the respective subtractors, and an m-th SAD storage unit of the SAD storage module comprises an adder which adds the output of an m-th subtractor of the subtraction module and a value present in an (m-1)-th storage unit of the SAD storage module, and stores the result of the addition.

The integer X may be 32.

The subtractors may perform subtraction using a 1's complement.

The number of bits of the adders of the SAD storage units may satisfy the following equation: Number of Bits Required by Adder= $\{\log_2(M_{n-1} + 2^D)\}$ (round up to zero decimal places) where $M_{n-1}$ is a maximum decimal value that can be output by a previous adder and $2^D$ (where D is an integer) is the size in bits of pixel data.

The number of bits of the SAD storage units may satisfy the following equation: Number of Bits Required by SAD Storage Unit=$\{\log2(M_{n-1} + 2^D)\}$ (round up to zero decimal places) where $M_{n-1}$ is a maximum decimal value that can be output by an adder of a previous SAD storage unit and $2^D$ (where D is an integer) is the size in bits of pixel data.

According to another aspect of the present invention, there is provided an encoder which estimates a motion vector in units of n×n macroblocks using a search range of ±X (where X is an integer), divides an area within a search range of ±X of a current macroblock into a number of columns, and allocates a BMA operator to the columns, wherein the BMA operator comprises a subtraction module which includes a plurality of subtractors that perform subtraction on pixel data of a current macroblock having a size of nxn and pixel data of each of a plurality of reference macroblocks within a search range of the current macroblock whenever a pulse is applied; and an SAD storage module which includes a plurality of SAD storage units that are sequentially arranged and receive the output of the respective subtractors, and an m-th SAD storage unit of the SAD storage module comprises an adder which adds the output of an m-th subtractor of the subtraction module and a value present in an (m-1)-th storage unit of the SAD storage module, and stores the result of the addition.

The integer X may be 32, and the number of columns may be 4.

A plurality of BMA operators may be allocated to the respective columns.

The subtractors may perform subtraction using a 1's complement.

The number of bits of the adders of the SAD storage units may satisfy the following equation: Number of Bits Required by Adder=$\{\log_2(M_{n-1} + 2^D)\}$ (round up to zero decimal places) where $M_{n-1}$ is a maximum decimal value that can be output by a previous adder and $2^D$ (where D is an integer) is the size in bits of pixel data.

The integer D may be 8, 16, 24, or 32.

The number of bits of the SAD storage units satisfies the following equation: Number of Bits Required by SAD Storage Unit=$\{\log_2(M_{n-1} + 2^D)\}$ (round up to zero decimal places) where $M_{n-1}$ is a maximum decimal value that can be output by an adder of a previous SAD storage unit and $2^D$ is the size in bits of pixel data.

The integer D may be 8, 16, 24, or 32.

The encoder may also include a memory module which includes a plurality of memories that are allocated to the respective columns and that provide the respective BMA operators with pixel data of a reference macroblock within the search range of ±X of the current macroblock; a delay module which includes a plurality of n-cycle delay units that are disposed between output terminals of the memories and input terminals of the respective BMA operators; and a plurality of selectors which are disposed at the input terminals of the respective BMA operators and select the output of the memories or the output of the delay units.

The integer X may be 32, and the number of columns may be 4.

BRIEF DESCRIPTION OF THE DRAWINGS

The accompanying drawings, which are included to provide a further understanding of the invention and are incorporated in and constitute a part of this application, illustrate exemplary embodiment(s) of the invention and together with the description serve to explain the principle of the invention. In the drawings:

FIGS. 1 through 7 each illustrate a plurality of macroblocks of a frame;
FIG. 8 illustrates a search range of ± 16;
FIG. 9 illustrates matching between a current macroblock and a reference macroblock;

FIG. 10 illustrates a block diagram of a block matching algorithm (BMA) operator according to an embodiment of the present invention;

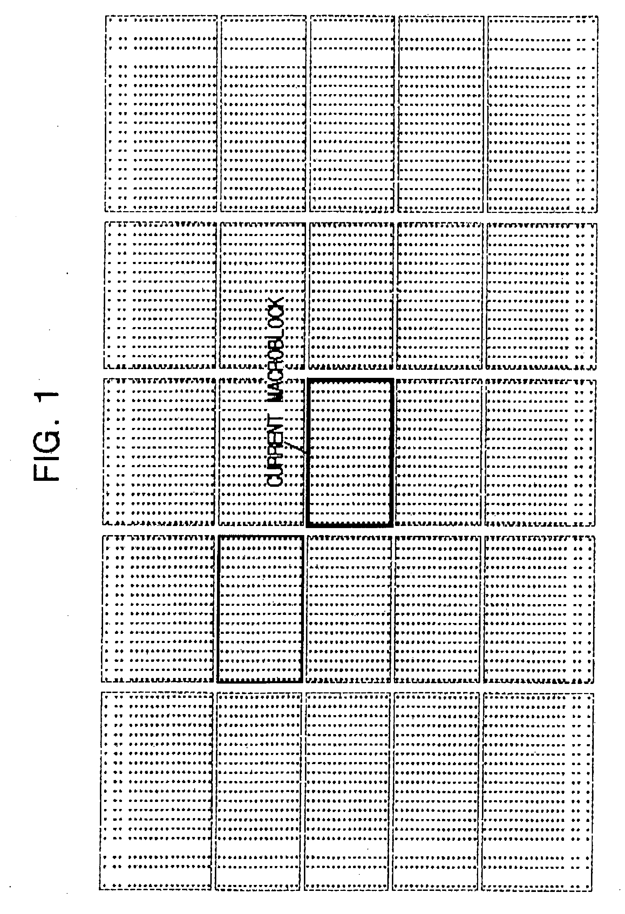

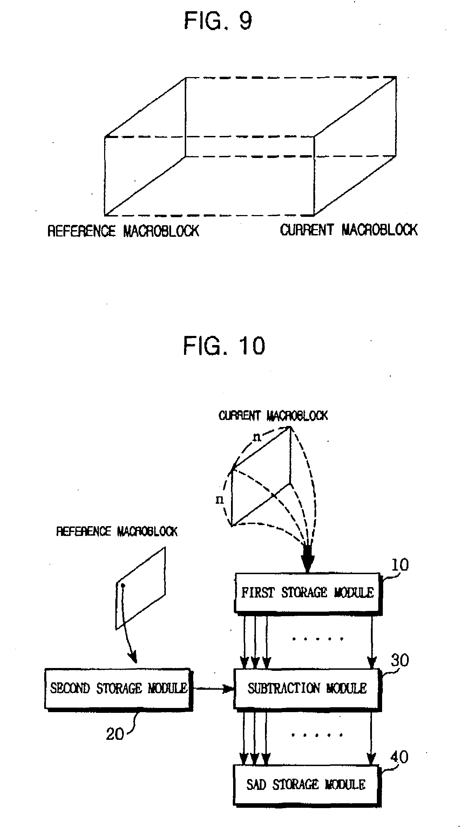

FIG. 1 illustrates a detailed circuit diagram of the BMA operator illustrated in FIG. 10;

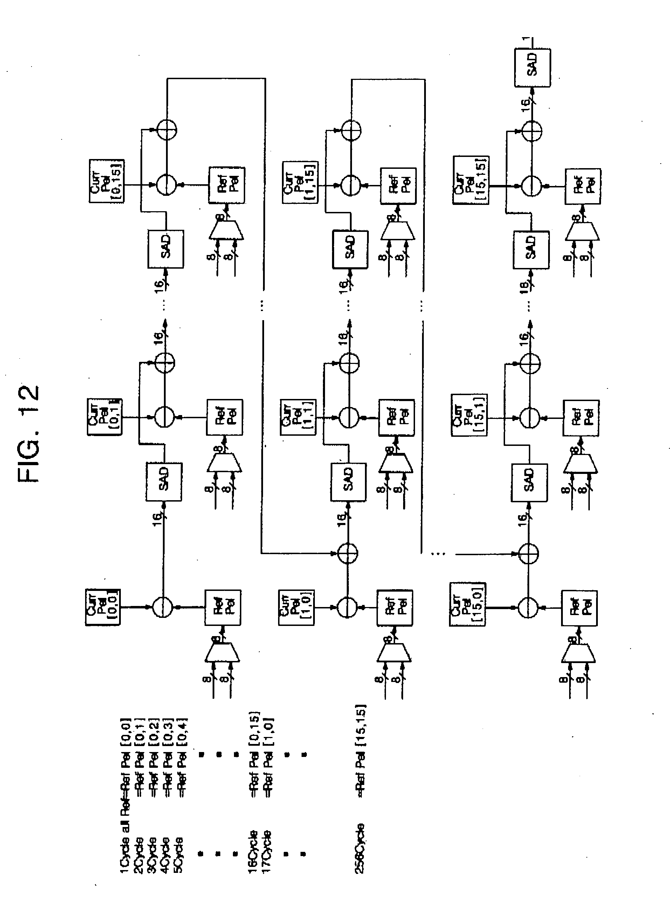

FIG. 12 illustrates an operation of the BMA operator illustrated in FIG. 10;

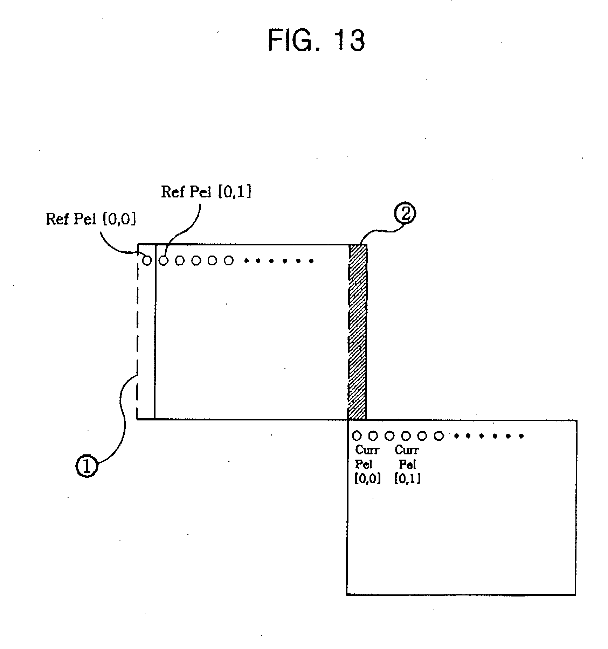

FIG. 13 illustrates a parallel processing method performed by the BMA operator illustrated in FIG. 10;

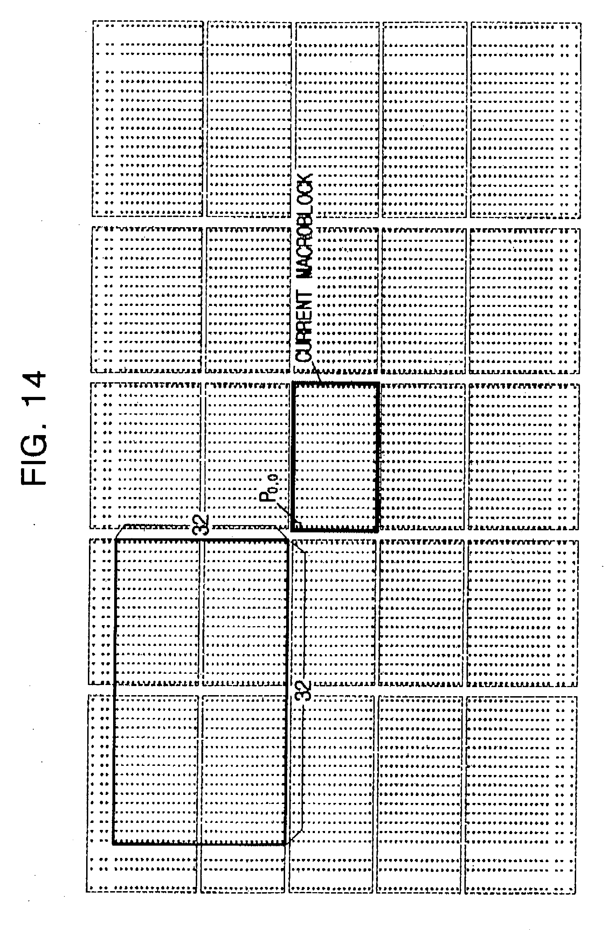

FIGS. 14 through 17 illustrate a BMA operation performed using a search range of ±32, according to an embodiment of the present invention;

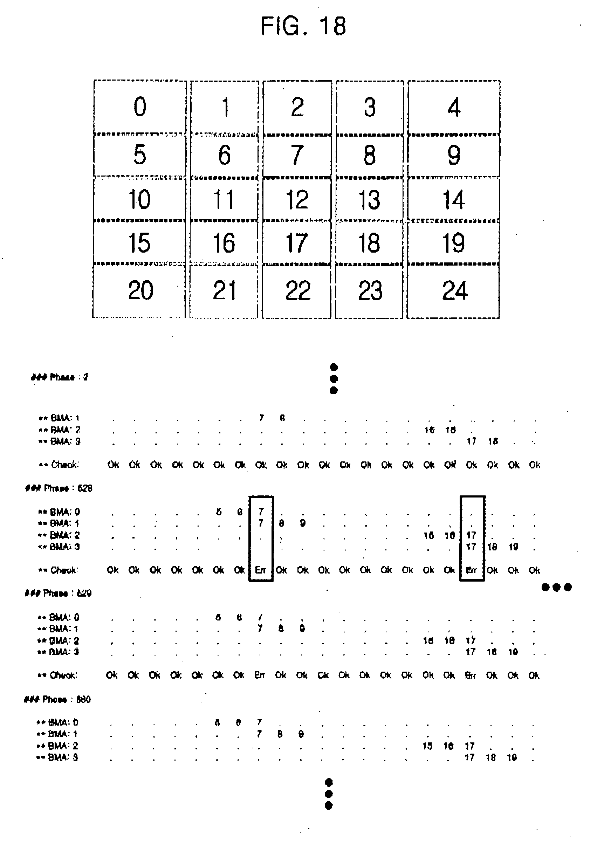

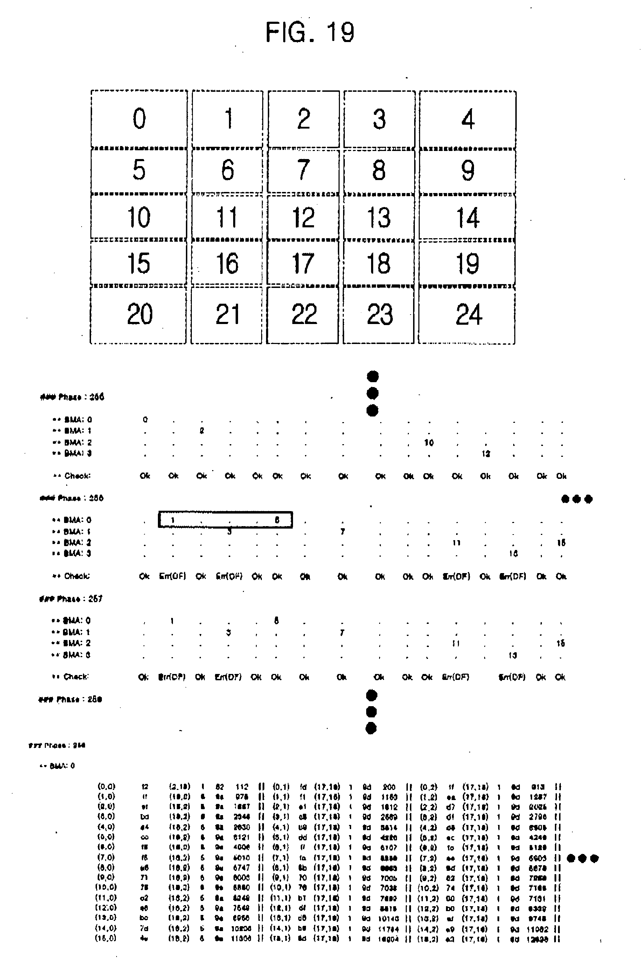

FIGS. 18 and 19 illustrate the reference numbers of memories that store pixel data and are requested during the BMA operation of the embodiment of FIGS. 14 through I7;

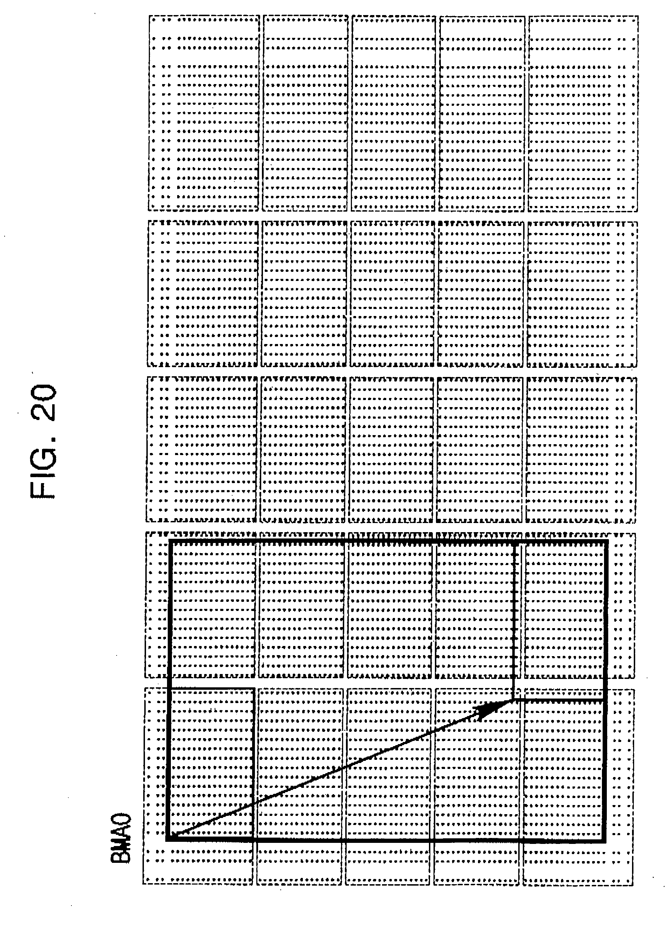

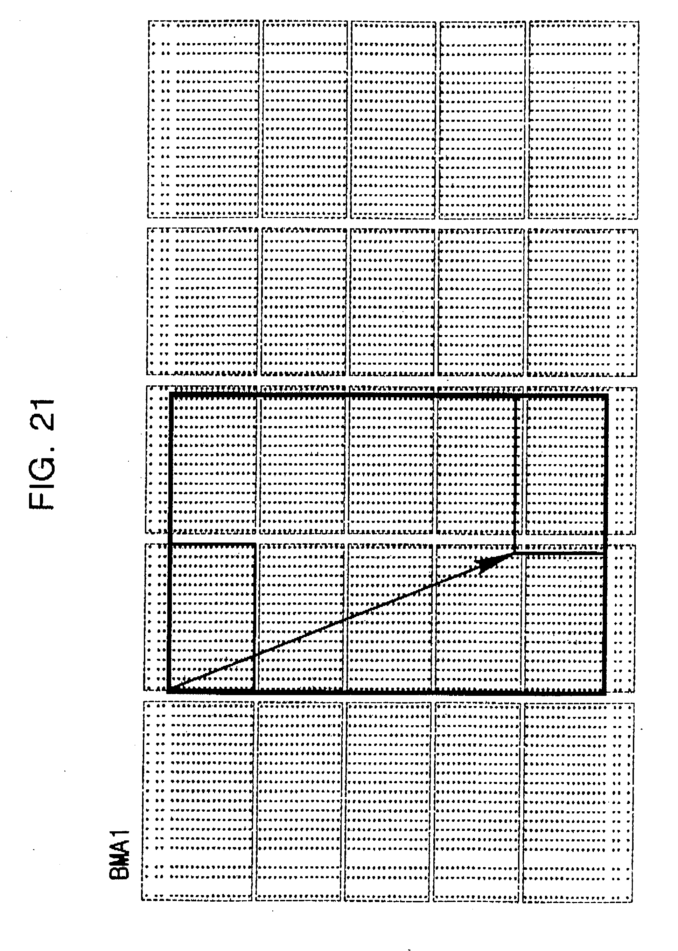

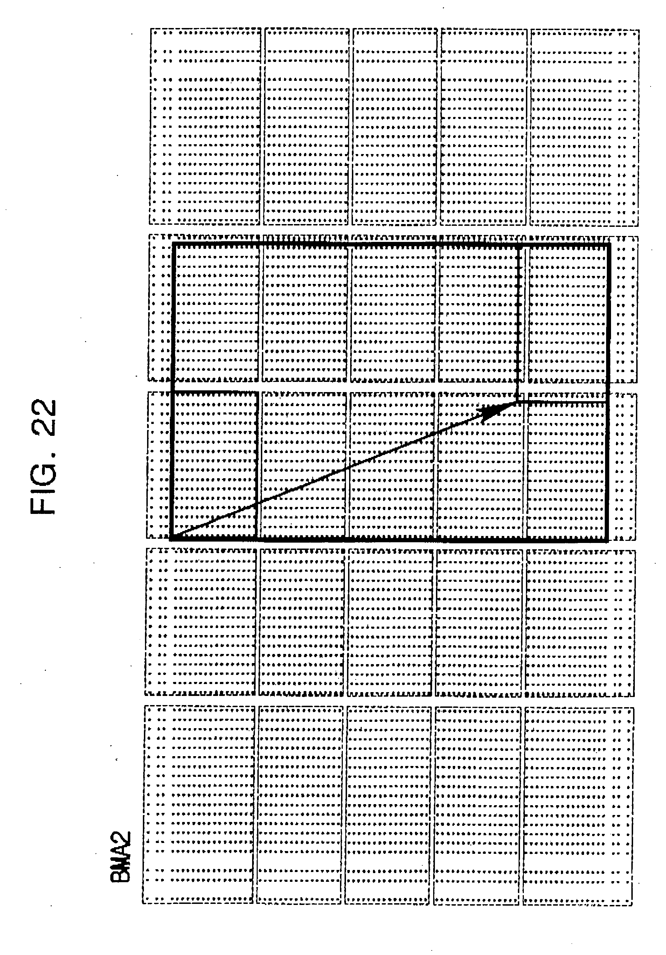

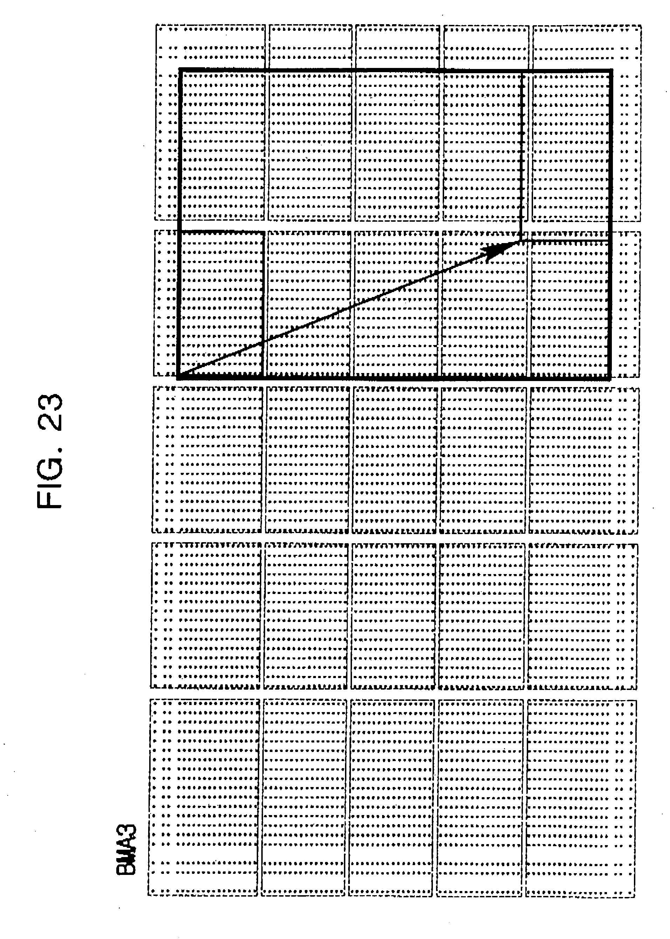

FIGS. 20 through 23 illustrate a BMA operation according to another embodiment of the present invention, which is an improvement to the embodiment of FIGS. 14 through 17;

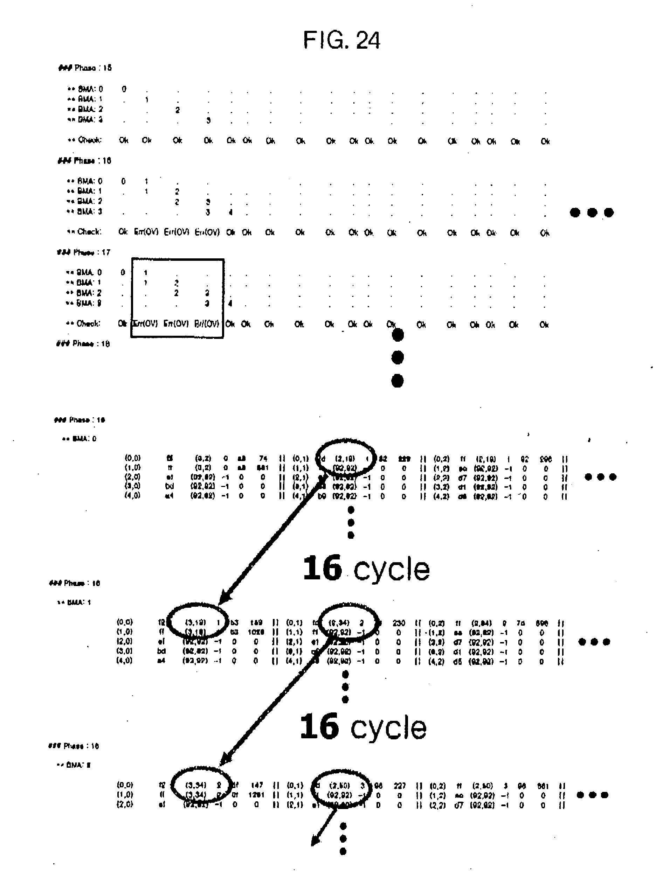

FIG. 24 illustrates the reference numbers of memories that store pixel data and are requested during the BMA operation of the embodiment of FIGS. 20 through 23;

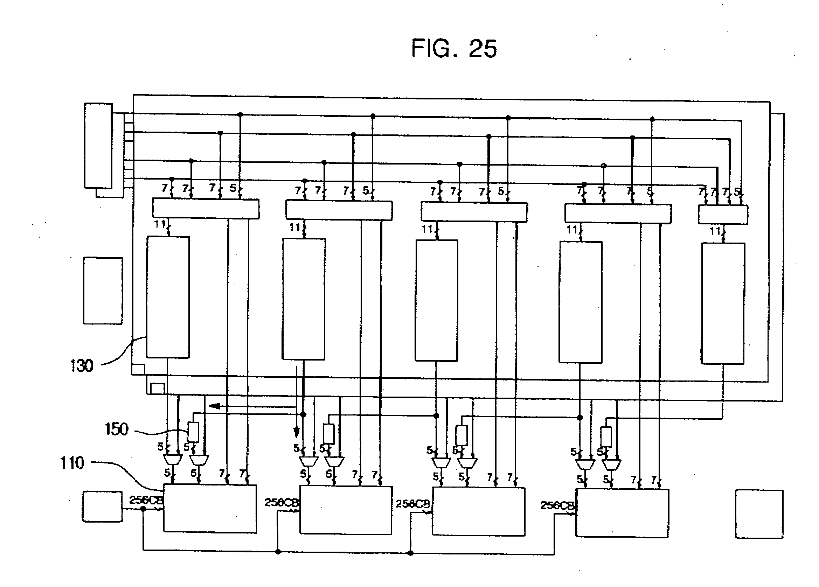

FIG. 25 illustrates a block diagram of a circuit for implementing the embodiment of FIGS. 20 through 24;

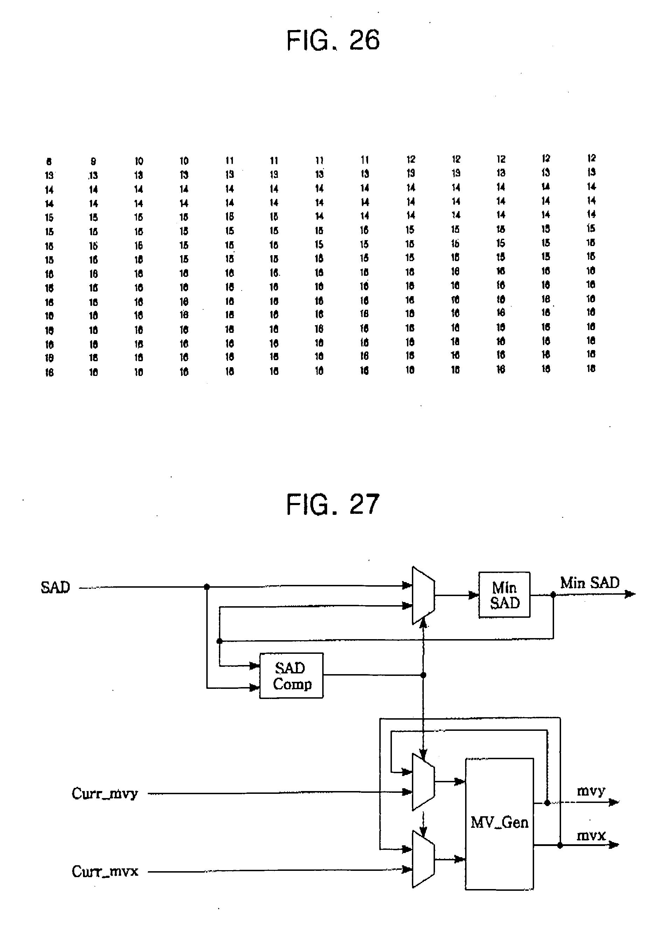

FIG. 26 illustrates the sizes in bits of a plurality of adders and a plurality of Sum of Absolute Differences (SAD) storage units of the BMA operator illustrated in FIG. 10;

FIG. 27 illustrates a block diagram of a circuit for extracting a minimum SAD value from a plurality of SAD values provided by the BMA operator illustrated in FIG. 10;

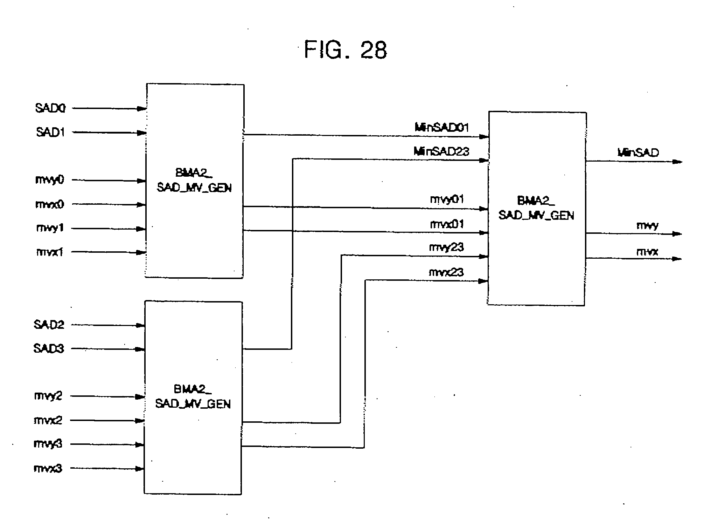

FIG. 28 illustrates a block diagram of a circuit for extracting a final minimum SAD value from a plurality of minimum SAD values; and

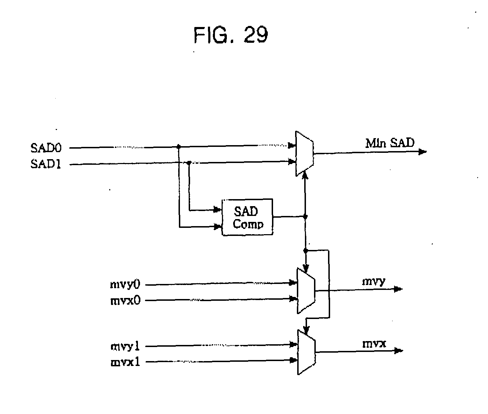

FIG. 29 illustrates a block diagram of a BMA2_SAD_MV_GEN unit illustrated in FIG. 28.

## DETAILED DESCRIPTION OF THE EXEMPLARY EMBODIMENTS

Reference will now be made in detail to the exemplary embodiments of the present invention, examples of which are illustrated in the accompanying drawings. The invention may, however, be embodied in many different forms and should not be construed as being limited to the embodiments set forth herein. Rather, these embodiments are provided so that this disclosure will be thorough and complete, and will fully convey the concept of the invention to those skilled in the art. Wherever possible, the same reference numerals will be used throughout the drawings to refer to the same or like parts.

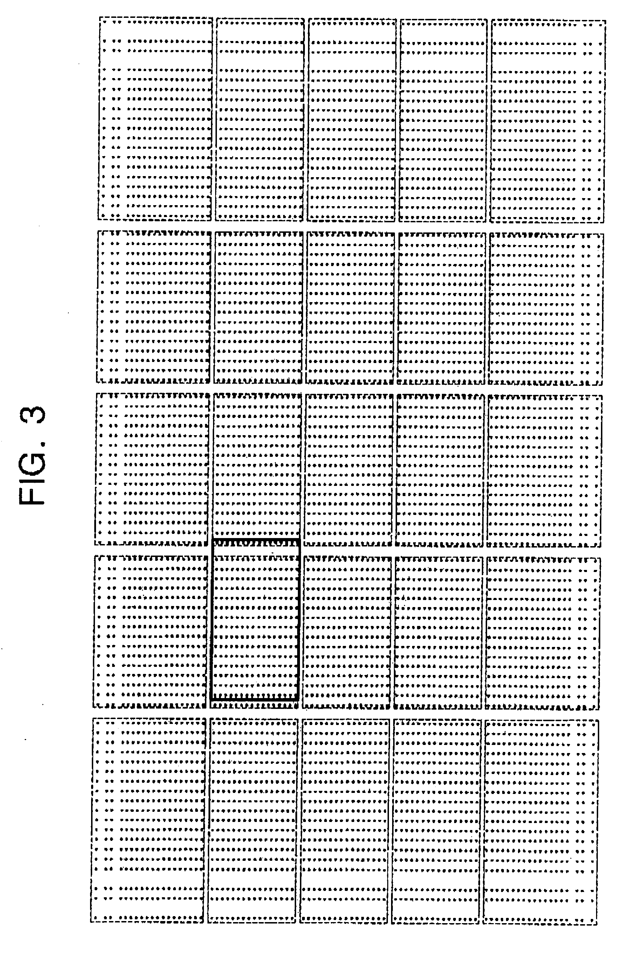

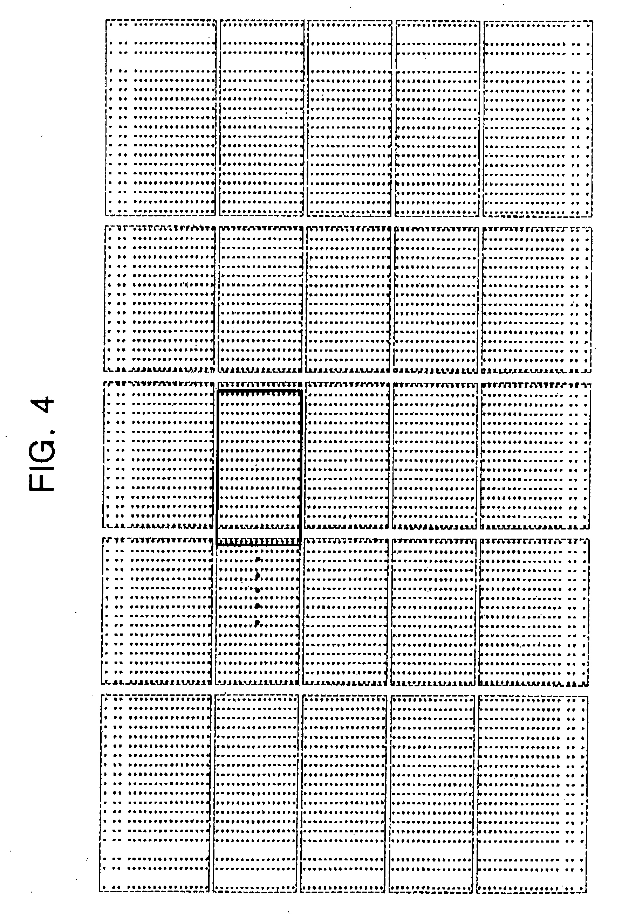

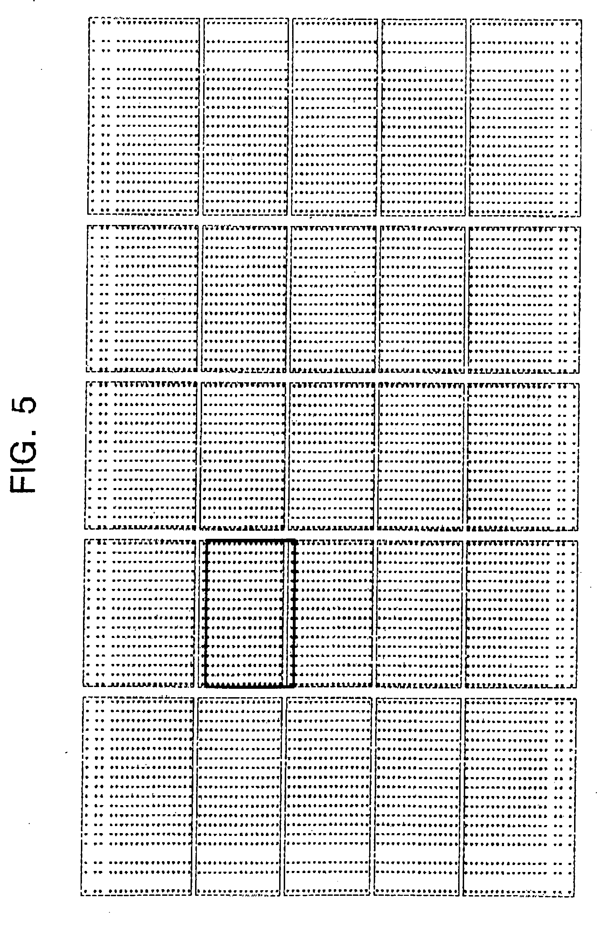

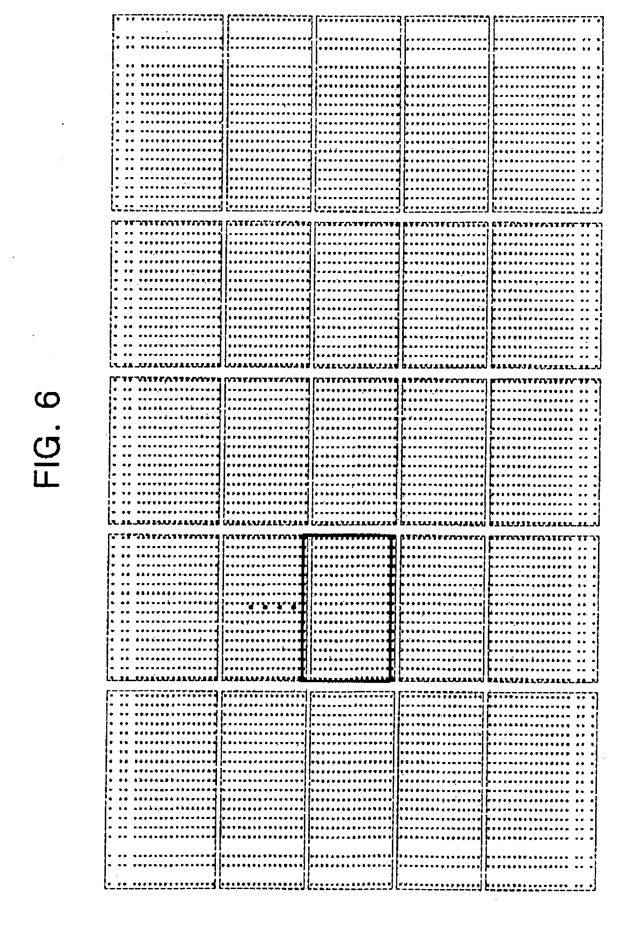

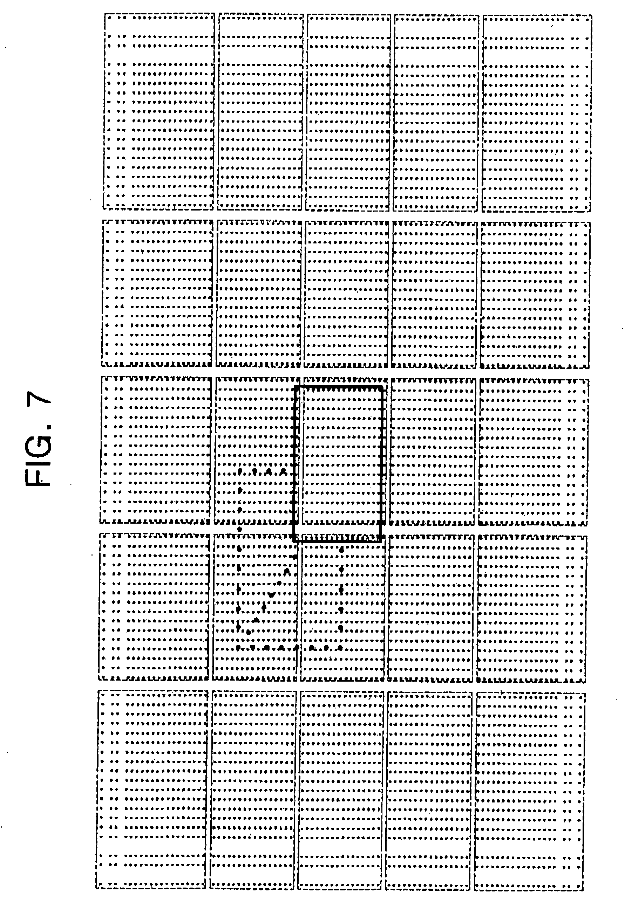

FIGS. 1 through 7 each illustrate a plurality of macroblocks of a frame. The term 'macroblock' is defined in the H.26X and MPEG standards.

FIG. 1 illustrates macroblocks having a size of 16 x 16, but the size of macroblocks is not restricted to this. That is, the size of macroblocks may vary from one standard to another.

Motion estimation is a process of compressing data by searching for a macroblock that is similar to a current macroblock and using the differences between the coordinates of the current macroblock and the identified macroblock, instead of using data of the current macroblock. The range in which a macroblock that is similar to a current macroblock is searched for is referred to as a search range. The larger the search range, the higher the compression rate and the higher the quality of pictures. However, the larger the search range, the more complicated the algorithm for processing a search range becomes.

Search ranges of ±16 and ±32 are defined in the H.26X and MPEG standards. The search range of ±16 has been more widely used in consideration of the tradeoffs between the complicatedness of algorithms, the quality of pictures, and compression rates.

Obviously, the quality of pictures is higher when using the search range of ±32 than when using the search range of ±16. In the case of moving image data with a lot of motions such as moving image data of a sport event, no macroblocks that match a current macroblock may be detected using the search range of ±16. In this case, a plurality of pixel values of the current macroblock must all be encoded, and thus, the compression rate may decrease. Therefore, it may be preferable to use the search range of ±32, instead of the search range of ±16 in all aspects except the complicatedness of algorithms.

A method of searching for a macroblock that matches a current macroblock within a search range of the current macroblock will hereinafter be described in detail with reference to FIGS. 1 through 7.

For convenience, the embodiment of FIGS. 1 through 7 will hereinafter be described in detail, taking as an example a macroblock (hereinafter referred to as the second quadrant macroblock) which is located in a second quadrant of an area within a search range of ±16 of a current macroblock.

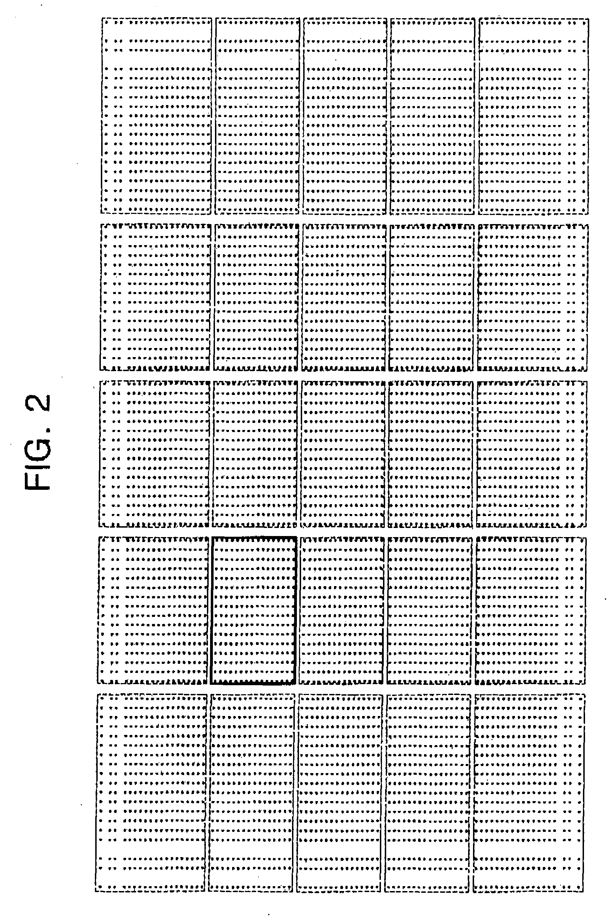

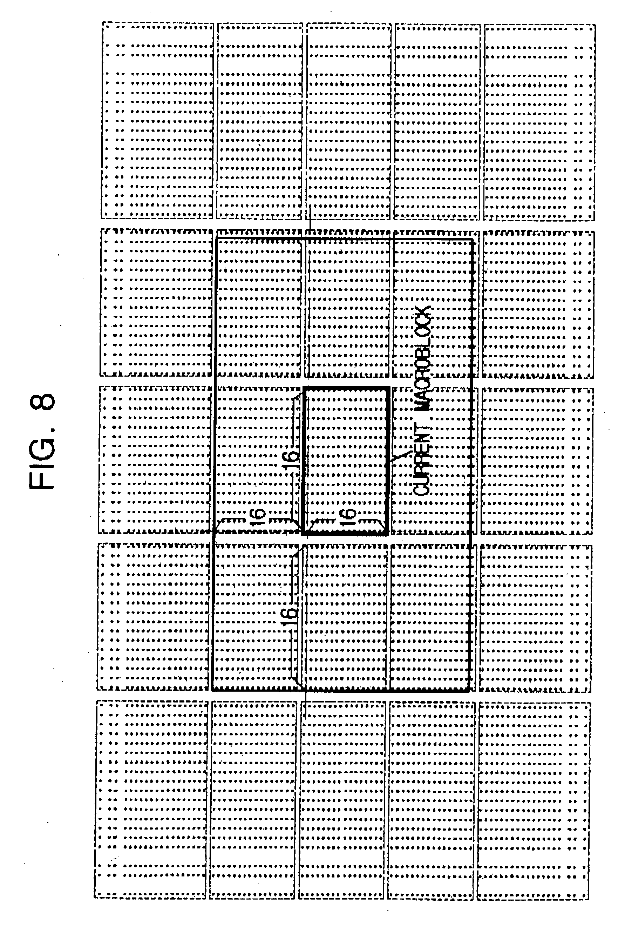

In order to perform block matching, a number of reference macroblocks which are to be compared with a current macroblock must be set using the second quadrant macroblock, as illustrated in FIGS. 2 through 7. A $16 \times 16$ macroblock having a predetermined pixel within the search range of ±16 of the current macroblock as its upper left apex may be set as a reference macroblock. In this manner, as many reference macroblocks as there are pixels within the search range of ±16 of the current macroblock may be set. Therefore, if block matching is performed within the search range of ±16 of the current macroblock, all macroblocks that are adjacent to the current macroblock may be searched through, as illustrated in FIG. 8.

A total of 256 (=16×16) reference macroblocks may be generated using the second quadrant macroblock. Then, the current macroblock is compared with each of the 256 reference macroblocks, and one of the 256 reference macroblocks that is most similar to the current macroblock is selected. This process may also be performed on first, third and fourth quadrants of the search range of ±16 of the current macroblock, thereby obtaining a total of four reference macroblocks that are similar to the current macroblocks. Then, one of the four reference macroblocks that is most similar to the current macroblocks is designated as a similar macroblock of the current macroblock.

The degree to which a reference macroblock is similar to a current macroblock may be determined by calculating the sum of absolute differences (SAD) between the reference macroblock and the current macroblock using a block matching algorithm (BMA), and this will hereinafter be described in detail with reference to FIG. 9.

Referring to FIG. 9, the differences between a plurality of pixel values of a current macroblock and respective corresponding pixel values of a reference macroblock are calculated, and the absolute values of the resulting pixel value differences are added up, thereby obtaining an SAD value. This process is performed on all reference macroblocks within a search range of the current macroblock, thereby obtaining a plurality of SAD values. Thereafter, a reference macroblock corresponding to a minimum of the SAD values is selected as a similar macroblock of the current macroblock. However, if the minimum of the SAD values does not satisfy a predefined threshold criterion, it may be determined that no similar block exists within the search range of the current macroblock, and then, the pixel values of the current macroblock, instead of coordinate data of the current macroblock, may be encoded.

Even though the basic concept of a BMA is as simple as illustrated in FIG. 9, the implementation of a BMA may not be as simple as illustrated in FIG. 9 because of various factors that need to be taken into consideration.

In order to realize a smooth motion picture, at least thirty frames must be displayed per second. For this, the speed of a BMA must be increased. In order to increase the speed of a BMA, a BMA operator having many gates may be used. However, the use of a BMA operator having a considerable number of gates may cause various problems such as high power consumption, generation of too much heat, and low productivity.

In order to address the above-mentioned problems, the present invention provides a new BMA operator, and this will hereinafter be described in detail.

FIG. 10 illustrates a block diagram of a BAM operator according to an embodiment of the present invention. Referring to FIG. 10, the BMA operator, which estimates a motion vector in units of n×n macroblocks, includes a first storage module 10 which stores a plurality of pixel values $c_{0,0}$ through $c_{n-1,n-1}$ of a current macroblock; a second storage module 20 which stores a pixel value of each reference macroblock within a search range of the current macroblock whenever a predetermined pulse is applied thereto; a subtraction module 30 which has a number of subtractors corresponding to the number of pixel values present in the first storage module 20 and performs subtraction on the pixel values present in the first storage module 20 and the pixel value present in the second storage module 20; and an SAD storage module 40 which has a number of SAD storage units corresponding to the number of pixel values present in the first storage module 10. An SAD storage unit of the SAD storage module 40 adds the output of a corresponding subtractor and a value present in the previous SAS storage unit.

More specifically, the first storage module 10 stores the pixel values of the current macroblock. The pixel values of the current macroblock are maintained unchanged until a BMA operation for the current macroblock is completed. That is, the pixel values of the current macroblock are stored in the first storage module 10 and maintained unchanged throughout the BMA operation for the current macroblock.

During the BAM operation for the current macroblock, the second storage module 20 stores each pixel value of a reference macroblock, which can be compared with the pixel values of the current macroblock. In general, a pixel value of a reference macroblock may be compared with all the pixel values present in the first storage module 10 at a time. However, the number of pixel values of a reference macroblock that can be compared with the pixel values present in the first storage module 10 at a time may be altered during a BMA operation.

The subtraction module 30 includes as many subtractors as there are pixel values in the first storage module 10. The subtraction module 30 compares the pixel values present in the first storage module 10 with a pixel value present in the second storage module 20 by performing subtraction. The number of bits of the subtractors of the subtraction module 30 may be determined according to the size of pixel data present in the first or second storage module 10 or 20. In order to reduce the number of gates of an encoder, the subtractors of the subtraction module 30 may be configured to have a required minimum number of bits.

The SAD storage module 40 stores the result of subtraction performed by the subtraction module 30. The SAD storage module 40, like the subtraction module 30, includes as many SAS storage units as there are pixel values in the first storage module 10.

An m-th SAS storage unit of the SAD storage module 40 may include an adder which has a predefined number of bits and is connected to an output terminal of an (m-1)-th SAS storage unit of the SAD storage module 40. The m-th SAS storage unit adds a value present in the (m-1)-th SAS storage unit and the result of subtraction performed by an m-th subtractor and stores the result of the addition therein.

In short, the BMA operator includes the subtraction module 30 which has a plurality of subtractors that perform subtraction on a plurality of pixel values of a current macroblock having a size of n×n and each of a plurality of pixel values of a reference macroblock within a search range of the current macroblock whenever a pulse is applied; and the SAD storage module 40 which has a plurality of SAS storage units that are sequentially arranged and that receive the output of the respective subtractors. The m-th SAS storage unit of the SAD storage module 40 includes an adder which adds the output of the m-th subtractor and the value present in the (m-1)-th SAS storage unit. The m-th SAS storage unit stores the result of the addition performed by the adder of the m-th SAS storage unit.

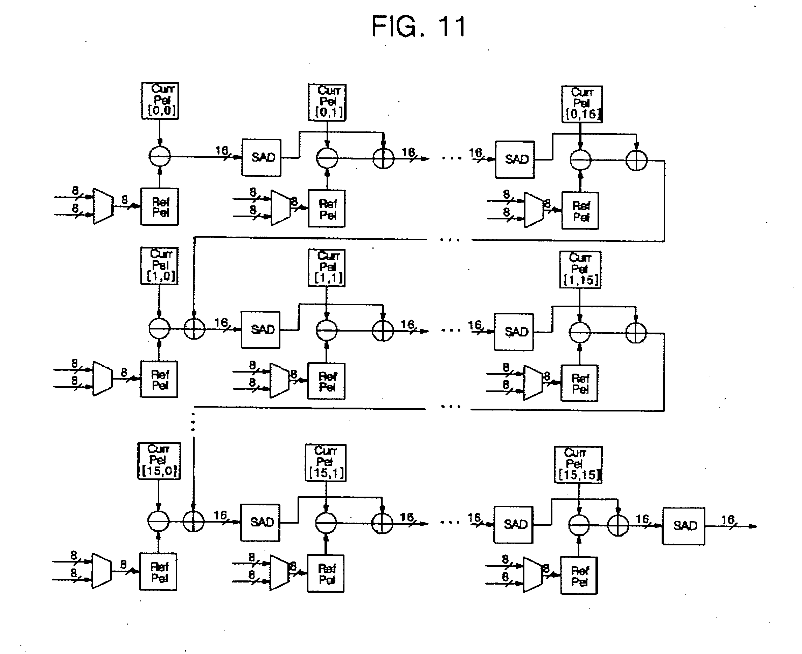

In this manner, the BMA operator may achieve a parallel processing method, and this will hereinafter be described in detail with reference to FIG. 11.

FIG. 11 illustrates a detailed circuit diagram of the BMA operator illustrated in FIG. 10. In the embodiment of FIG. 11, n=16.

Referring to FIG. 11, pixel data of a current macroblock may be stored in the first storage module 10 of the BMA operator, and pixel data of a reference macroblock may be stored in the second storage module 20 of the BMA operator.

A plurality of pixel values Curr Pel[0,0] through Curr Pel[15,15] of a current macroblock are maintained unchanged until a BMA operation for the current macroblock and a reference macroblock within a search range of the current macroblock is completed. Only the pixel data present in the second storage module 20, i.e., pixel data of a reference macroblock, is updated whenever a predetermined clock or pulse is applied.

Only one pixel value of a reference macroblock, i.e., pixel data of a coordinate point in the reference macroblock, may be input to the second storage module 20 at a time. Thus, the pixel data present in the second storage module 20 may correspond to all the current pixel values Curr Pel[0,0] through Curr Pel[15,15].

The coordinates of the pixel data present in the second storage module 20, i.e., the coordinates of pixel data Ref Pel of a reference macroblock, may be determined using Equation (1):

$$\text{X Coordinate of Pixel Data of Reference Macroblock=X Coordinate of Curr Pel+X}$$
$$\text{Coordinate of Previous Ref Pel}$$

$$\text{Y Coordinate of Pixel Data of Reference Macroblock=Y Coordinate of Curr Pel+Y}$$
$$\text{Coordinate of previous Ref Pel}$$

where Curr Pel indicates pixel data of a current macroblock. In general, the pixel data Ref Pel generally has different coordinate values even for the same cycle, and may thus be suitable for use in parallel processing, which will be described later in detail with reference to FIG. 13. Referring to FIG. 11, a multiplexer MUX is disposed at an input terminal of the second storage module 20, and is driven by a control module (not shown). The multiplexer MUX and the control module determine the coordinate values of pixel data to be designated as the pixel data Ref Pel.

A BMA operation performed by the BMA operator illustrated in FIG. 10 will hereinafter be described in detail with reference to FIG. 11. For convenience, assume that the pixel data Ref Pel, which is stored in the second storage module 20, has the same value throughout one cycle.

During a first cycle, a pixel value Ref Pel[0,0] of a reference macroblock is stored in the second storage module 20, the subtractors of the subtraction module 30 perform subtraction on the pixel value Ref Pel[0,0] and each of a plurality of pixel values Curr Pel[0,0] through Curr Pel[15,15] of a current macroblock, and the results of the subtraction are stored in the respective SAD storage units of the SAD storage module 40. In this case, all the values stored in the SAD storage units, except the value stored in an SAD storage unit corresponding to the pixel value Curr Pel[0,0], are ignored (or deemed null).

During a second cycle, a pixel value Ref Pel[0,1] of the reference macroblock is stored in the second storage module 20, and the subtractors of the subtraction module 30 perform subtraction on the pixel value Ref Pel[0,1] and each of the pixel values Curr Pel[0,0] through Curr Pel [15,15]. Then, the SAD storage units add the results of the subtraction performed by their respective subtractors to the values (Curr $Pel_{cycle\ 1}$ SAD) present in their respective previous SAD storage units and the store the results of the addition. In this case, the value present in an SAD storage unit subsequent to an SAD storage unit corresponding to the pixel value Curr Pel[0,1] is ignored (or deemed null).

Block matching between the pixel values Curr Pel[0,0] through Curr Pel[15,15] and 256 pixel values of a reference macroblock having a pixel corresponding to the pixel value Ref Pel[0,0] as its upper left apex may be completed by performing 256 cycles of the above-mentioned operation, and the SAD between the current macroblock and the reference macroblock of a reference macroblock is stored in an SAD storage unit corresponding to the pixel value Curr Pel[15,15]. In this manner, the SAD between the current macroblock and each of 256 macroblocks may be determined over 512 cycles. Give all this, it may be concluded that a value stored in an (n×n)-th SAD storage unit of the SAD storage module 40 can be used as an actual SAD value from the time of the application of an (n×n)-th pulse onward.

Referring back to the second cycle, the SAD value present in an SAD storage unit subsequent to the SAD storage unit corresponding to the pixel value Curr Pel[0,1] is ignored, but the value present in the SAD storage unit corresponding to the pixel value Curr Pel[0,1] is not ignored. That is, the result of subtraction performed between the pixel values Curr Pel[0,0] and Ref Pel[0,1] is stored in the SAD storage unit corresponding to the pixel value Curr Pel[0,1] and indicates the beginning point of reference block □ illustrated in FIG. 13. Therefore, it is possible to perform a BMA operation in a parallel manner. In order to receive pixel data in a gray area of FIG. 13, the pixel data Ref Pel must have different values.

In this manner, the SAD between the current macroblock and each of the 256 reference macroblocks may be determined, thereby completing a BMA operation. From a 257-th cycle on, an SAD value stored in the (nxn)-th SAD storage unit of the SAD storage module 40 may be used as an actual SAD value. An SAD value corresponding to each reference macroblock may be output by the (n×n)-th SAD storage unit of the SAD storage module 40 during each cycle after a 256-th cycle, and this may continue until a 512-th cycle.

The operation of the BMA operator of the embodiment of FIG. 11 has been described, taking as an example a macroblock in a second quadrant of an area within a search range of ± 16 of a current macroblock. The operation of the BMA operator of the embodiment of FIG. 11 may also be applied to first, third and fourth quadrant of the area within the search range of ±16 of the current macroblock, and then whichever of the macroblocks within the search range of ±16 of the current macroblock has a minimum SAD value may be determined as a similar macroblock of the current macroblock.

In order to realize thirty frames per second display rates when each frame has 800x600 pixels, each macroblock need to be coded at least within 2536 cycles given the clock speed of currently available hardware devices. The BMA operator of the embodiment of FIG. 11 can provide high coding speed by completing a BMA operation for 256 reference macroblocks within 512 cycles.

Therefore, even when a search range of ±32 is used, the BMA operator of the embodiment of FIG. 11 can effectively perform a BMA operation without the need to increase the number of gates of an encoder.

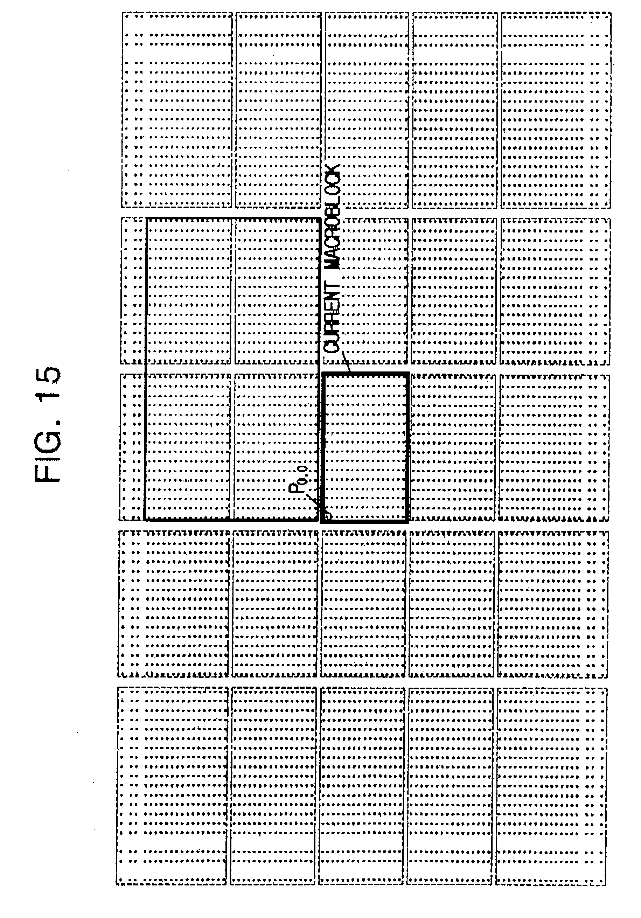

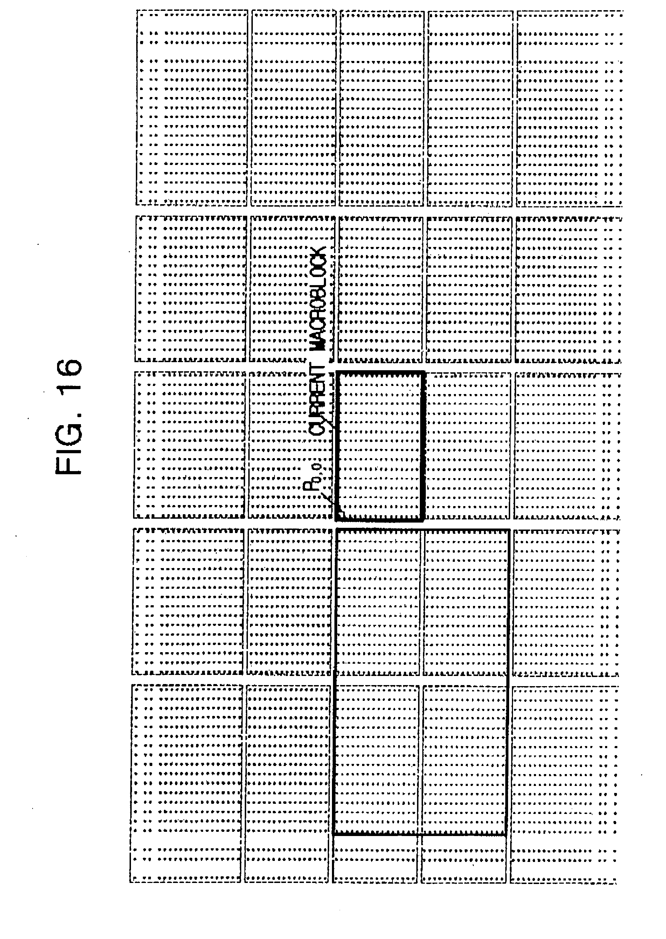

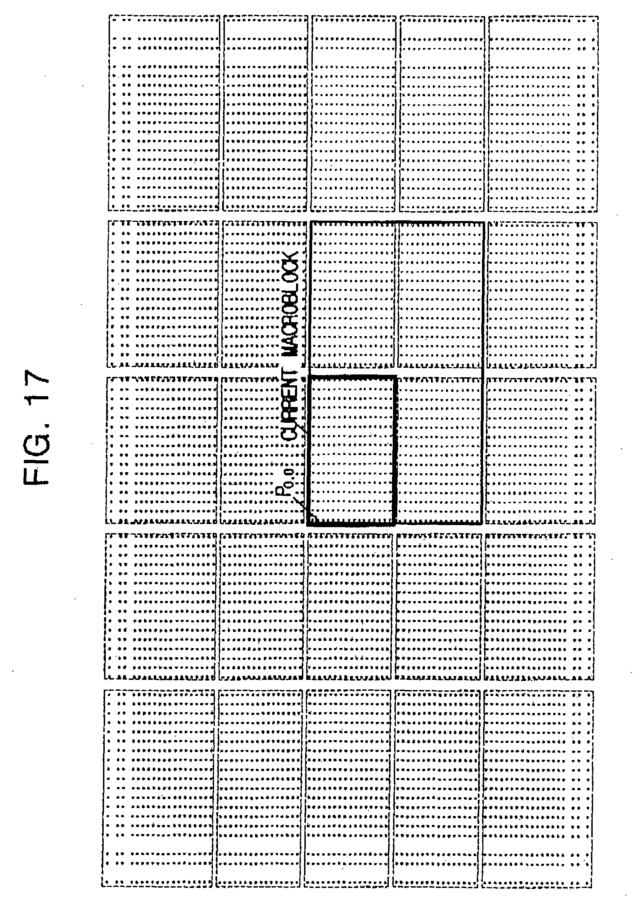

FIGS. 14 through 17 illustrate a BMA operation according to an embodiment of the present invention. More specifically, FIG. 14 illustrates four macroblocks in a second quadrant of a coordinate plane whose origin is located at the position of a pixel $p_{0,0}$ (i.e., Curr Pel[0,0]) of a current macroblock, FIG. 15 illustrates four macroblocks in the first quadrant of the coordinate plane, FIG. 16 illustrates four macroblocks in a third quadrant of the coordinate plane, and FIG. 17 illustrates four macroblocks in a fourth quadrant of the coordinate plane.

Referring to FIGS. 14 through 17, each macroblock includes 16x16 pixels, but the present invention is not restricted to this. In addition, referring to FIGS. 14 through 17, a search range of ±32 is used, but the present invention is not restricted to this. That is, a search range may be increased by increasing the number of BMA operators, and thus, a wider search range than the search range of ±32 may be used.

Referring to FIGS. 14 through 17, four BMA operators, like the one illustrated in FIG. 10, may be allocated to first through fourth quadrants, respectively, of an area within a predetermined search range of a current macroblock.

Since it takes 512 cycles to perform a BMA operation for each reference macroblock, it takes only a total of 2048 cycles (=512×4), which is less than 2536 cycles, to complete a BMA operation for four reference macroblocks.

By using BMA operators in a parallel processing manner, it is possible to effectively perform a BMA operation using a search range of ±32 and using only a required minimum number of gates.

Three rows or columns of pixel data on each of the boundaries of each of the frames illustrated in FIGS. 14 through 17 may be used in a padding operation.

In the meantime, it is possible to further reduce the number of gates of an encoder than in the embodiment of FIGS. 14 through 17 by making modifications to the embodiment of FIGS. 14 through 17, and this will be described later in detail with reference to FIGS. 20 through 23.

In a case when four BMA operators are allocated to first through fourth quadrants, respectively, of an area within a predetermined search range of a current macroblock, as performed in the embodiment of FIGS. 14 through 17, and a memory module, including a plurality of memories in which pixel data is stored and from which the second storage module 20 can fetch pixel data, is additionally provided, a plurality of BMA operators may attempt to reference the same memory in the memory module, as illustrated in FIG. 18, or one BMA operator may attempt to reference different memories in the memory module, as illustrated in FIG. 19. Referring to FIGS. 18 and 19, reference character BMA0 indicates a BMA operator allocated to a first quadrant of an area within a predetermined search range of a current macroblock, reference character BMA 1 indicates a BMA operator allocated to a second quadrant of the area, reference character BMA2 indicates a BMA operator allocated to a third quadrant of the area, and reference character BMA3 indicates a BMA operator allocated to a fourth quadrant of the area.

Given all this, a memory module must be designed to provide multiple outputs. However, a multi-output memory module requires more gates than a single-output memory module.

A method of performing the functions of a multi-output memory module by using a single-output memory module will hereinafter be described in detail.

FIGS. 20 through 23 illustrate a BMA operation according to another embodiment of the present invention, which is an improvement to the embodiment of FIGS. 14 through 17. Referring to FIGS. 20 through 23, an encoder, which estimates a motion vector in units of a plurality of $n \times n$ macroblocks using a search range of $\pm X$, divides an area within a search range $\pm X$ of a current macroblock into a number of columns and performs a BMA operation using a number of BMA operators allocated to the respective columns.

That is, in the embodiment of FIGS. 20 through 23, a plurality of BMA operators are respectively allocated to a plurality of columns of a search range, whereas, in the embodiment of FIGS. 14 through 17, four BMA operators are respectively allocated to first through fourth quadrants of an area within a search range of a current macroblock.

In the embodiment of FIGS. 20 through 23, like in the embodiment of FIGS. 14 through 17, a BMA operation may be performed in units of $16 \times 16$ (n=16) macroblocks using a search range of $\pm 32$ (X=32) and using a plurality of BMA operators, like the one illustrated in FIG. 11, as illustrated in FIG. 24. However, in the embodiment of FIGS. 20 through 23, unlike in the embodiment of FIGS. 14 through 17, an area within a search range of a current macroblock may be divided into four columns, and then four BMA operators may be respectively allocated to the four columns.

Referring to FIG. 25, five memories 130 which store pixel data of respective corresponding columns of a search range may be provided. The output terminal of each of the five memories, except the output terminal of the first memory, may be directly connected to a BMA operator 110 allocated to a corresponding column and may be connected through a 16-cycle delay unit 150 to a BMA operator previous to the BMA operator allocated to the corresponding column.

Then, referring to FIG. 24, data which is delayed by as much as 16 cycles may be input to a BMA operator allocated to a predetermined column of a search range under the control of a selection module (e.g., a multiplexer), and thus, the BMA operator allocated to the predetermined column may not need to require data present in a memory corresponding to a column subsequent to the predetermined column.

Therefore, in the embodiment of FIGS. 20 through 24, the functions of multi-output memories may be provided even using single-output memories, and thus, the number of gates of an encoder including a plurality of memories may be reduced, thereby reducing the manufacturing cost and the power consumption of an encoder.

In short, an encoder, which estimates a motion vector in units of a plurality of $n \times n$ macroblocks using a search range of $\pm X$, may include a plurality of BMA operators which have the structure illustrated in FIG. 11 and are respectively allocated to a plurality of columns of a search range; a memory module which includes a plurality of memories that correspond to the respective columns and that provide respective corresponding BMA operators with pixel data of a reference macroblock within the search range; a delay module which includes a plurality of n-cycle delay units that are disposed between the output terminals of the memories and the input terminals of the previous ones of the correspond BMA operators, each correspond BMA operator being provided in the previous column; and a plurality of selection modules which are disposed at the input terminals of the respective BMA operators and selectively output the output of the respective memories. Therefore, a memory corresponding to a predetermined column of a search range do not need to simultaneously output both data (provided by a BMA operator corresponding to the predetermined column) corresponding to a current cycle and data (provided by a BMA operator previous to the BMA operator corresponding to the predetermined column) corresponding to a previous cycle that is 16 cycles earlier than the current cycle, even if the data for the previous cycle is requested. Therefore, single-output memories having fewer gates than multi-output memories may be used.

Referring to FIGS. 24 and 25, n and X may be set to 16 and 32, respectively, as prescribed in the existing H. 26X and MPEG standards. Since X=32, four columns may be generated, and a number of memories corresponding to five columns may be arranged because the fourth of the four columns needs a subsequent column. The subtraction module 30 of the BMA operator of the embodiment of FIG. 11 may perform subtraction using a 1's complement method.

More specifically, the subtraction module 30 may perform subtraction on pixel data of a current macroblock and pixel data of a reference macroblock using the 1's complement method.

In general, digital circuits perform subtraction on binary data by adding 2's complement, and thus require two adders: one adder for adding 2's complement and the other adder for obtaining 2's complement by adding +1 to 1's complement.

The 1's complement method, unlike the 2's complement method, does not involve the addition of +1, and thus contributes to the reduction of the number of gates required for addition. In short, it is possible to reduce the required number of gates and thus to reduce the power consumption and the size of a BMA operator by performing subtraction using the 1's complement method.

The 2's complement method has only one zero, whereas the 1's complement method acquires +0 and -0 from 1's complement. Thus, the 2's complement method has been widely used to perform subtraction because of its ease of implementation. However, since a BMA operator processes data as absolute values, subtraction in a BMA operator may be performed by removing an adder for adding +1, which is required in the 2's complement method, using the 1's complement method.

An adder in the BMA operator of the embodiment of FIG. 11 may be designed to satisfy Equation (2):

$$\text{Number of Bits Required by Adder} = \{\log_2(M_{n-1}+2^D)\} \text{ (round up to zero decimal places)}$$

where $M_{n-1}$ is a maximum decimal value that can be output by a previous adder and $2^D$ (where D is an integer) indicates the size in bits of pixel data.

That is, an adder in the BMA operator of the embodiment of FIG. 11 may be designed have a required minimum size for storing all necessary data. In this manner, it is possible to reduce the number of gates of a BMA operator.

For example, the situation when the integer D of Equation (2) is 8 will hereinafter be described in detail with reference to FIG. 26. When D=6, pixel data can represent 256 colors. The integer D may be set to a value, other than 8 (for example, 16, 24, or 32).

Referring to FIG. 26, a first adder may be configured to have eight bits. More specifically, the first adder processes only eight-bit data output by a first subtractor. Thus, eight bits are sufficient to configure the first adder. The first adder may be optional. In this case, the result of computation performed by a subtractor or a subtraction module may be directly input to a first SAD storage unit.

A second adder may be configured to have nine bits. More specifically, the second adder adds data present in a first SAD storage unit (a maximum of 256 colors) and data output by a second subtractor (a maximum of 256 colors) and is thus required to be able to represent a maximum of 512 colors. Therefore, nine bits are required for the second adder.

A third adder may be configured to have ten bits. More specifically, the third adder adds data (a maximum of 512 colors) present in a second SAD storage unit and data (a maximum of 256 colors) output by a third subtractor and is thus required to be able to represent a maximum 768 colors. Therefore, ten bits are required for the third adder.

A fourth adder, like the third adder, may be configured to have ten bits. More specifically, the fourth adder adds data (a maximum of 768 colors) present in a third SAD storage unit and data (a maximum of 256 colors) output by a fourth subtractor and is thus required to be able to represent a maximum 1024 colors. Therefore, ten bits are required for the fourth adder.

In this manner, it is possible to considerably reduce the number of gates of a BMA operator.

The principle described above with reference to FIG. 26 also applies to a SAD storage unit in the BMA operator of the embodiment of FIG. 11.

That is, the number of bits of a SAD storage unit in the BMA operator of the embodiment of FIG. 11 satisfies Equation (3):

$$\text{Number of Bits Required by Current SAD Storage Unit} = \{\log_2(M_{n-1}+2^D)\} \text{ (round up to zero decimal places)}$$

where $M_{n-1}$ is a maximum decimal value that can be output by an adder of a previous SAD storage unit and $2^D$ is the size in bits of pixel data.

The BMA operator of the embodiment of FIG. 11 outputs a plurality of SAD values, and thus, it is necessary to extract a minimum of the SAD values.

FIG. 27 illustrates a circuit for selecting a minimum SAD value from a plurality of SAD data. Referring to FIG. 27, an SAD comparator SAD Comp receives a plurality of input SAD values which are provided by a BMA operator and respectively correspond to a plurality of reference macroblocks, and extracts a minimum Min SAD of the input SAD values. The coordinates (Curr_mvy, Curr_mvx) of a reference pixel of a reference macroblock corresponding to the minimum SAD value Min SAD are input to an MV_Gen unit (Motion Vector Generator). Then, the MV_Gen unit outputs a motion vector (mvx, mvy).

In the meantime, motion vectors are used in moving image processing to represent variations in the position of an object over time. Motion vectors are classified into two-dimensional (2D) motion vectors that represent virtual motions in a 2D image and three-dimensional (3D) motion vectors that represent actual motions in a 3D space.

The input SAD values and a plurality of motion vectors (i.e., the coordinates of the reference pixels of the reference macroblocks) are stored in a Min SAD unit and the MV_Gen unit, respectively, until the extraction of the minimum SAD value Min SAD is completed. Once the extraction of the minimum SAD value Min SAD is completed, the Min SAD unit and the MV_Gen unit control the output of the minimum SAD value Min SAD and the motion vector (mvx, mvy).

If four BMA operators are used, four minimum SAD values and four motion vectors may be output. Then, a minimum of the four minimum SAD values may need to be determined by comparing the four minimum SAD values with one another and comparing the four motion vectors with one another, and this will hereinafter be described in detail with reference to FIG. 28.

FIG. 28 illustrates a circuit for collecting a plurality of minimum SAD values and a plurality of motion vectors from a plurality of BMA operators and extracting the minimum of the minimum SAD values at high speed. Given that a plurality of minimum SAD values and a plurality of motion vectors are simultaneously output by the circuit illustrated in FIG. 27, the circuit illustrated in FIG. 28 may be provided to simultaneously process all the minimum SAD values and the motion vectors and thus to increase the operating speed.

Referring to FIG. 28, two BMA2_SAD _MV - GEN units are disposed at the front of the circuit, and one BMA2_SAD _MV - GEN unit is disposed at the rear of the circuit. Each of the three BMA2_SAD_MV_GEN units receives two SAD values and two motion vectors and outputs the smaller one of the two SAD values and the smaller one of the two motion vectors.

Since only two SAD values and two motion vectors respectively corresponding to the two SAD values are output from the two BMA2_SAD_MV_GEN units at the front of the circuit, only one BMA2_SAD_MV_GEN unit may be sufficient for the rear of the circuit.

Each of the three BMA2_SAD_MV_GEN units illustrated in FIG. 28 may include a SAD comparator SAD Comp and three multiplexers, as illustrated in FIG. 29.

Referring to FIG. 29, the SAD comparator SAD Comp compares two input SAD values SADO and SAD1, and transmits the result of the comparison to the three multiplexers so that one of the two input SAD values can be selected as a minimum SAD value Min SAD, and that the minimum SAD value Min SAD and a motion vector (mvy, mvx) corresponding to the minimum SAD value Min SAD can be output from the three multiplexers. Then, a reference macroblock corresponding to the minimum SAD value Min SAD and the motion vector (mvy, mvx)) may be determined as a similar macroblock of a current macroblock.

If the minimum SAD value Min SAD satisfies a predefined threshold criterion, the compression of image data may be completed simply by encoding the differences between the coordinates (mvy, mvx) and the coordinates of a reference pixel of the current macroblock. On the other hand, if the minimum SAD value Min SAD fails to satisfy the predefined threshold criterion, all the pixel values of the current macroblock may need to be encoded. Even in this case, however, it is still possible to compress moving image data having a lot of motion at high rate by using a search range of $\pm 32$.

According to the present invention, an SAD value is obtained by performing a BMA operation in a parallel manner, and thus, it is possible to perform encoding in real time by using a search range of $\pm 32$ or more.

In addition, according to the present invention, it is possible to compress moving image data at high rate by using a wide search range.

Moreover, according to the present invention, it is possible to reduce the number of gates of an encoder and thus to reduce the power consumption of an encoder and facilitate the manufacture of an encoder by arranging a plurality of BMA operators to respective corresponding columns of a search range, appropriately delaying pixel data of a reference block, and performing subtraction using a 1's complement.

According to the present invention, encoding may be performed in real time by using a search range of $\pm 32$ or more, and thus, it is possible to effectively compress moving image data having a lot of motion at high rate. In addition, even when using a search range of $\pm 32$ or more, it is possible to provide high picture quality by performing a BMA operation on every reference block. Moreover, it is possible to reduce the number of gates of an encoder and thus to increase the power consumption efficiency of an encoder, reduce the manufacturing cost of an encoder and prevent the generation of excessive heat.

It will be apparent to those skilled in the art that various modifications and variations can be made in the present invention. Thus, it is intended that the present invention covers such modifications and variations of the invention.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to an exemplary embodiment, it is understood that the words that have been used are words of description and illustration, rather than words of limitation. As the present invention may be embodied in several forms without departing from the spirit or essential characteristics thereof, it should also be understood that the above-described embodiment is not limited by any of the details of the foregoing description, unless otherwise specified. Rather, the above-described embodiment should be construed broadly within the spirit and scope of the present invention as defined in the appended claims. Therefore, changes may be made within the metes and bounds of the appended claims, as presently stated and as amended, without departing from the scope and spirit of the invention in its aspects

## Claims

1.  A block matching algorithm (BMA) operator comprising:

    a subtraction module which includes a plurality of subtractors that perform subtraction on pixel data of a current macroblock having a size of $n \times n$ and pixel data of each of a plurality of reference macroblocks within a search range of the current macroblock whenever a pulse is applied; and
    a Sum of Absolute Differences (SAD) storage module which includes a plurality of SAD storage units that are sequentially arranged and receive the output of the respective subtractors,
    wherein an m-th SAD storage unit of the SAD storage module comprises an adder which adds the output of an m-th subtractor of the subtraction module and a value present in an (m-1)-th storage unit of the SAD storage module, and stores the result of the addition.

2.  The BMA operator of claim 1, wherein, from the time of application of an $(n \times n)$-th pulse onward, a value present in an $(n \times n)$-th SAD storage unit is used as an actual SAD.

3.  An encoder which estimates a motion vector in units of $n \times n$ macroblocks using a search range of $\pm X$ (where X is an integer) and allocates a BMA operator to each of first through fourth quadrants of a coordinate plane whose origin is located at the position of a pixel $P_{0,0}$ of a current macroblock,
    wherein the BMA operator comprises a subtraction module which includes a plurality of subtractors that perform subtraction on pixel data of a current macroblock having a size of $n \times n$ and pixel data of each of a plurality of reference macroblocks within a search range of the current macroblock whenever a pulse is applied; and an SAD storage module which includes a plurality of SAD storage units that are sequentially arranged and receive the output of the respective subtractors, and an m-th SAD storage unit of the SAD storage module comprises an adder which adds the output of an m-th subtractor of the subtraction module and a value present in an (m-1)-th storage unit of the SAD storage module, and stores the result of the addition.

4.  The encoder of claim 3, wherein the integer X is 32.

5.  The encoder of claim 3, wherein the subtractors perform subtraction using a 1's complement.

6.  The encoder of claim 3, wherein the number of bits of the adders of the SAD storage units satisfies the following equation: Number of Bits Required by Adder=$\{\log_2(M_{n-1}+2^D)\}$ (round up to zero decimal places) where $M_{n-1}$ is a maximum decimal value that can be output by a previous adder and $2^D$ (where D is an integer) is the size in bits of pixel data.

7.  The encoder of claim 3, wherein the number of bits of the SAD storage units satisfies the following equation: Number of Bits Required by SAD Storage Unit=$\{\log2(M_{n-1}+2^D)\}$ (round up to zero decimal places) where $M_{n-1}$ is a maximum decimal value that can be output by an adder of a previous SAD storage unit and $2^D$ (where D is an integer) is the size in bits of pixel data.

8. An encoder which estimates a motion vector in units of n×n macroblocks using a search range of ±X (where X is an integer), divides an area within a search range of ±X of a current macroblock into a number of columns, and allocates a BMA operator to the columns, wherein the BMA operator comprises a subtraction module which includes a plurality of subtractors that perform subtraction on pixel data of a current macroblock having a size of n×n and pixel data of each of a plurality of reference macroblocks within a search range of the current macroblock whenever a pulse is applied; and an SAD storage module which includes a plurality of SAD storage units that are sequentially arranged and receive the output of the respective subtractors, and an m-th SAD storage unit of the SAD storage module comprises an adder which adds the output of an m-th subtractor of the subtraction module and a value present in an (m-1)-th storage unit of the SAD storage module, and stores the result of the addition.

9. The encoder of claim 8, wherein the integer X is 32.

10. The encoder of claim 9, wherein the number of columns is 4.

11. The encoder of claim 8, wherein a plurality of BMA operators are allocated to the respective columns.

12. The encoder of claim 8, wherein the subtractors perform subtraction using a 1's complement.

13. The encoder of claim 8, wherein the number of bits of the adders of the SAD storage units satisfies the following equation: Number of Bits Required by Adder=$\{log2(M_{n-1}+2^D)\}$, (round up to zero decimal places) where $M_{n-1}$, is a maximum decimal value that can be output by a previous adder and 2° (where D is an integer) is the size in bits of pixel data.

14. The encoder of claim 13, wherein the integer D is 8, 16, 24, or 32.

15. The encoder of claim 8, wherein the number of bits of the SAD storage units satisfies the following equation: Number of Bits Required by SAD Storage Unit=$\{log2(M_{n-1}+2^D)\}$ (round up to zero decimal places) where $M_{n-1}$ is a maximum decimal value that can be output by an adder of a previous SAD storage unit and $2^D$ is the size in bits of pixel data.

16. The encoder of claim 15, wherein the integer D is 8, 16, 24, or 32.

17. The encoder of claim 8, further comprising:

a memory module which includes a plurality of memories that are allocated to the respective columns and that provide the respective BMA operators with pixel data of a reference macroblock within the search range of ±X of the current macroblock; a delay module which includes a plurality of n-cycle delay units that are disposed between the output terminals of the memories and the input terminals of the previous ones of the correspond BMA operators, each correspond BMA operator being provided in the previous column; and a plurality of selectors which are disposed at the input terminals of the respective BMA operators and select the output of the memories or the output of the delay units.

18. The encoder of claim 17, wherein the integer X is 32.

19. The encoder of claim 18, wherein the number of columns is 4.

# FIG. 1

CURRENT MACROBLOCK

EP 1 981 281 A2

FIG. 2

FIG. 3

FIG. 4

FIG. 5

FIG. 6

FIG. 7

FIG. 8

CURRENT MACROBLOCK

EP 1 981 281 A2

# FIG. 9

REFERENCE MACROBLOCK          CURRENT MACROBLOCK

# FIG. 10

CURRENT MACROBLOCK

n

n

REFERENCE MACROBLOCK

FIRST STORAGE MODULE — 10

SECOND STORAGE MODULE

20

SUBTRACTION MODULE — 30

SAD STORAGE MODULE — 40

# FIG. 11

EP 1 981 281 A2

# FIG. 12

1Cycle all Ref=Ref Pel [0,0]
2Cycle       =Ref Pel [0,1]
3Cycle       =Ref Pel [0,2]
4Cycle       =Ref Pel [0,3]
5Cycle       =Ref Pel [0,4]
   .              .
   .              .
   .              .
16Cycle      =Ref Pel [0,15]
17Cycle      =Ref Pel [1,0]
   .              .
   .              .
256Cycle     =Ref Pel [15,15]

EP 1 981 281 A2

# FIG. 13

# FIG. 14

EP 1 981 281 A2

# FIG. 15

$P_{0,0}$

CURRENT MACROBLOCK

EP 1 981 281 A2

# FIG. 16

EP 1 981 281 A2

$P_{0,0}$ CURRENT MACROBLOCK

FIG. 17

$P_{0,0}$ CURRENT MACROBLOCK

EP 1 981 281 A2

# FIG. 18

| 0 | 1 | 2 | 3 | 4 |
|---|---|---|---|---|
| 5 | 6 | 7 | 8 | 9 |
| 10 | 11 | 12 | 13 | 14 |
| 15 | 16 | 17 | 18 | 19 |
| 20 | 21 | 22 | 23 | 24 |

### Phase : 2

```
** BMA: 1     .  .  .  .  .  .  .  7  8  .  .  .  .  .  .  .  .  .  .  .  .
** BMA: 2     .  .  .  .  .  .  .  .  .  .  .  .  .  .  .  15 16 .  .  .  .
** BMA: 3     .  .  .  .  .  .  .  .  .  .  .  .  .  .  .  .  17 18 .  .
** Check:     Ok Ok Ok Ok Ok Ok Ok Ok Ok Ok Ok Ok Ok Ok Ok Ok Ok Ok Ok Ok Ok
```

### Phase : 528

```
** BMA: 0     .  .  .  .  .  .  5  6 |7|  .  .  .  .  .  .  .  . | . | .  .  .
** BMA: 1     .  .  .  .  .  .  . |7| 8  9  .  .  .  .  .  .  . | . | .  .  .
** BMA: 2     .  .  .  .  .  .  . | . | .  .  .  .  .  .  15 16 |17|  .  .  .
** BMA: 3     .  .  .  .  .  .  . | . | .  .  .  .  .  .  .  . |17| 18 19 .
** Check:     Ok Ok Ok Ok Ok Ok Ok|Err|Ok Ok Ok Ok Ok Ok Ok Ok Ok|Err|Ok Ok Ok
```

### Phase : 529

```
** BMA: 0     .  .  .  .  .  5  6  7  .  .  .  .  .  .  .  .  .  .  .  .  .
** BMA: 1     .  .  .  .  .  .  7  8  9  .  .  .  .  .  .  .  .  .  .  .
** BMA: 2     .  .  .  .  .  .  .  .  .  .  .  .  .  15 16 17 .  .  .  .
** BMA: 3     .  .  .  .  .  .  .  .  .  .  .  .  .  .  17 18 19 .  .
** Check:     Ok Ok Ok Ok Ok Ok Ok Err Ok Ok Ok Ok Ok Ok Ok Ok Ok Err Ok Ok Ok
```

### Phase : 530

```
** BMA: 0     .  .  .  .  .  5  6  7  .  .  .  .  .  .  .  .  .  .  .  .
** BMA: 1     .  .  .  .  .  .  7  8  9  .  .  .  .  .  .  .  .  .  .
** BMA: 2     .  .  .  .  .  .  .  .  .  .  .  .  .  15 16 17 .  .  .
** BMA: 3     .  .  .  .  .  .  .  .  .  .  .  .  .  .  17 18 19 .
```

# FIG. 19

| 0 | 1 | 2 | 3 | 4 |
|---|---|---|---|---|
| 5 | 6 | 7 | 8 | 9 |
| 10 | 11 | 12 | 13 | 14 |
| 15 | 16 | 17 | 18 | 19 |
| 20 | 21 | 22 | 23 | 24 |

Phase : 255

BMA: 0    0

BMA: 1        2

BMA: 2                        10

BMA: 3                            12

Check:  Ok  Ok  Ok  Ok  Ok  Ok  Ok  Ok  Ok  Ok  Ok  Ok  Ok  Ok  Ok

Phase : 256

BMA: 0        1              6

BMA: 1            3              7

BMA: 2                        11              15

BMA: 3                            16

Check:  Ok  Err(DF)  Ok  Err(DF)  Ok  Ok  Ok  Ok  Ok  Ok  Ok  Err(DF)  Ok  Err(DF)  Ok  Ok

Phase : 257

BMA: 0        1              6

BMA: 1            3              7

BMA: 2                        11              15

BMA: 3                            13

Check:  Ok  Err(DF)  Ok  Err(DF)  Ok  Ok  Ok  Ok  Ok  Ok  Ok  Err(DF)  Err(DF)  Ok  Ok

Phase : 258

Phase : 314

BMA: 0

| (0,0) | 12 | (2,18) | 1 | 82 | 112 | (0,1) | fd | (17,18) | 1 | 9d | 200 | (0,2) | 1f | (17,18) | 1 | 9d | 013 |
| (1,0) | 1f | (18,0) | 6 | 9a | 978 | (1,1) | f1 | (17,18) | 1 | 9d | 1160 | (1,2) | ea | (17,18) | 1 | 9d | 1287 |
| (2,0) | 91 | (18,2) | 6 | 9a | 1687 | (2,1) | e1 | (17,18) | 1 | 9d | 1812 | (2,2) | d7 | (17,18) | 1 | 9d | 2026 |
| (3,0) | bd | (18,2) | 6 | 9a | 2044 | (3,1) | c8 | (17,18) | 1 | 9d | 2669 | (3,2) | d1 | (17,18) | 1 | 9d | 2796 |
| (4,0) | 44 | (18,2) | 6 | 9a | 2630 | (4,1) | b9 | (17,18) | 1 | 9d | 3614 | (4,2) | c8 | (17,18) | 1 | 9d | 6906 |
| (5,0) | cc | (18,2) | 6 | 9a | 6121 | (5,1) | dd | (17,18) | 1 | 9d | 4260 | (5,2) | ec | (17,18) | 1 | 9a | 4246 |
| (6,0) | 1f | (18,0) | 6 | 9a | 4006 | (6,1) | f | (17,18) | 1 | 9d | 6107 | (6,0) | 1o | (17,18) | 1 | 9d | 5129 |
| (7,0) | f6 | (18,2) | 6 | 9a | 6010 | (7,1) | fa | (17,18) | 1 | 9d | 6386 | (7,2) | 44 | (17,18) | 1 | 9d | 6906 |
| (8,0) | 46 | (18,2) | 6 | 9a | 6747 | (8,1) | 8b | (17,18) | 1 | 9d | 6960 | (8,2) | 9d | (17,18) | 1 | 9d | 6679 |
| (9,0) | 71 | (18,9) | 6 | 9a | 6006 | (9,1) | 70 | (17,18) | 1 | 9d | 700b | (9,2) | 82 | (17,18) | 1 | 9d | 7060 |
| (10,0) | 76 | (18,3) | 6 | 9a | 6860 | (10,1) | 76 | (17,18) | 1 | 9d | 7038 | (10,2) | 74 | (17,18) | 1 | 9d | 7166 |
| (11,0) | 02 | (18,2) | 6 | 9a | 8248 | (11,1) | b7 | (17,18) | 1 | 9d | 7899 | (11,2) | 00 | (17,18) | 1 | 9d | 7101 |
| (12,0) | 46 | (18,2) | 6 | 9a | 7648 | (12,1) | df | (17,18) | 1 | 9d | 8815 | (12,2) | b0 | (17,18) | 1 | 9d | 8309 |
| (13,0) | bc | (18,2) | 6 | 9a | 6966 | (13,1) | d6 | (17,18) | 1 | 9d | 10140 | (13,2) | af | (17,18) | 1 | 9d | 9746 |
| (14,0) | 7d | (18,2) | 6 | 9a | 10206 | (14,1) | b8 | (17,18) | 1 | 9d | 11784 | (14,2) | e9 | (17,18) | 1 | 9d | 11062 |
| (15,0) | 4e | (18,2) | 6 | 9a | 11606 | (15,1) | 8d | (17,18) | 1 | 9d | 16004 | (15,2) | a3 | (17,18) | 1 | 9d | 12496 |

FIG. 20

# FIG. 21

BMA1

EP 1 981 281 A2

# FIG. 22

BMA2

EP 1 981 281 A2

# FIG. 23

BMA3

## FIG. 24

*### Phase : 15*

```
** BMA: 0    0    .    .    .    .    .    .    .    .    .    .    .    .    .    .    .    .    .
** RMA: 1    .    1    .    .    .    .    .    .    .    .    .    .    .    .    .    .    .    .
** BMA: 2    .    .    2    .    .    .    .    .    .    .    .    .    .    .    .    .    .    .
** DMA: 3    .    .    .    3    .    .    .    .    .    .    .    .    .    .    .    .    .    .

** Check:  Ok   Ok   Ok   Ok   Ok  Ok   Ok    Ok    Ok   Ok  Ok   Ok    Ok    Ok   Ok  Ok   Ok    Ok
```

*### Phase : 16*

```
** BMA: 0    0    1    .    .    .    .    .    .    .    .    .    .    .    .    .    .    .    .
** BMA: 1    .    1    2    .    .    .    .    .    .    .    .    .    .    .    .    .    .    .
** BMA: 2    .    .    2    3    .    .    .    .    .    .    .    .    .    .    .    .    .    .
** BMA: 3    .    .    .    3    4    .    .    .    .    .    .    .    .    .    .    .    .    .

** Check:  Ok  Err(OV) Err(OV) Err(OV)  Ok  Ok   Ok    Ok    Ok   Ok  Ok   Ok    Ok    Ok  Ok  Ok   Ok    Ok
```

*### Phase : 17*

```
** BMA: 0    0    1    .    .    .    .    .    .    .    .    .    .    .    .    .    .    .    .
** BMA: 1    .    1    2    .    .    .    .    .    .    .    .    .    .    .    .    .    .    .
** BMA: 2    .    .    2    3    .    .    .    .    .    .    .    .    .    .    .    .    .    .
** BMA: 3    .    .    .    3    4    .    .    .    .    .    .    .    .    .    .    .    .    .

** Check:  Ok  Err(OV) Err(OV) Err(OV)  Ok  Ok   Ok    Ok    Ok   Ok  Ok   Ok    Ok    Ok  Ok  Ok   Ok    Ok
```

*### Phase : 18*

*### Phase : 19*

** BMA: 0

```
(0,0)   65   (0,2)   0   ...  74  || (0,1)  0d (2,19)  ...  62  127 || (0,2)  ff  (2,19)  1  92  296 ||
(1,0)   ff   (0,2)   0   ...  681 || (1,1)  ff (92,92)  0    0    0 || (1,2)  ac  (92,92) -1   0    0 ||
(2,0)   ...  (92,92) -1  0    0   || (2,1)  ... (92,92) -1    0    0 || (2,2)  d7  (92,92) -1   0    0 ||
(3,0)   bd   (92,92) -1  0    0   || (3,1)  ... (92,92) -1    0    0 || (3,2)  d1  (92,92) -1   0    0 ||
(4,0)   a4   (92,92) -1  0    0   || (4,1)  b0 (92,92) -1    0    0 || (4,2)  a6  (92,92) -1   0    0 ||
```

## 16 cycle

*### Phase : 19*

** BMA: 1

```
(0,0)   12   (3,19)  1   b3  169 || (0,1)  1d (9,34)  2   ...  230 || (0,2)  ff  (2,84)  0  76  696 ||
(1,0)   ff   (3,19)      68  1078 || (1,1)  ff (92,92) -1   0    0 || (1,2)  ac  (92,92) -1   0    0 ||
(2,0)   ...  (92,92) -1  0    0   || (2,1)  ... (92,92) -1   0    0 || (2,2)  d7  (92,92) -1   0    0 ||
(3,0)   bd   (92,92) -1  0    0   || (3,1)  ... (92,92) -1   0    0 || (3,2)  d1  (92,92) -1   0    0 ||
(4,0)   a4   (92,92) -1  0    0   || (4,1)  ... (92,92) -1   0    0 || (4,2)  d6  (92,92) -1   0    0 ||
```

## 16 cycle

*### Phase : 19*

** BMA: 8

```
(0,0)   12   (3,34)  2   df  147 || (0,1)  1d (2,50)  3   06  227 || (0,2)  ff  (2,50)  3  06  661 ||
(1,0)   ff   (3,34)      07  1281 || (1,1)  ff (92,92) -1   0    0 || (1,2)  ac  (92,92) -1   0    0 ||
(2,0)   ...  (92,92) -1  0    0   || (2,1)  ... (92,92) -1   0    0 || (2,2)  d7  (92,92) -1   0    0 ||
```

## FIG. 25

EP 1 981 281 A2

# FIG. 26

| 8 | 9 | 10 | 10 | 11 | 11 | 11 | 11 | 12 | 12 | 12 | 12 | 12 |
|---|---|----|----|----|----|----|----|----|----|----|----|----|
| 13 | 13 | 13 | 13 | 13 | 13 | 13 | 13 | 13 | 13 | 13 | 13 | 13 |
| 14 | 14 | 14 | 14 | 14 | 14 | 14 | 14 | 14 | 14 | 14 | 14 | 14 |
| 14 | 14 | 14 | 14 | 14 | 14 | 14 | 14 | 14 | 14 | 14 | 14 | 14 |
| 15 | 15 | 15 | 15 | 15 | 15 | 14 | 14 | 14 | 14 | 14 | 14 | 14 |
| 15 | 15 | 15 | 15 | 15 | 15 | 15 | 15 | 15 | 15 | 15 | 15 | 15 |
| 15 | 15 | 15 | 15 | 15 | 15 | 15 | 15 | 15 | 15 | 15 | 15 | 15 |
| 15 | 15 | 15 | 15 | 15 | 15 | 15 | 15 | 15 | 15 | 15 | 15 | 15 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |
| 16 | 16 | 16 | 16 | 16 | 16 | 16 | 16 | 16 | 16 | 16 | 16 | 16 |

# FIG. 27

SAD — Min SAD

SAD Comp

Curr_mvy

Curr_mvx

MV_Gen — mvy — mvx

## FIG. 28

FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070026913